(19) Europäisches Patentamt / European Patent Office / Office européen des brevets

(11) **EP 2 064 557 B1**

(12) **EUROPEAN PATENT SPECIFICATION**

(45) Date of publication and mention of the grant of the patent:
**16.09.2015 Bulletin 2015/38**

(21) Application number: **07820535.8**

(22) Date of filing: **24.09.2007**

(51) Int Cl.:
*G01N 35/10* *(2006.01)*　　*G01N 35/00* *(2006.01)*
*G01N 35/02* *(2006.01)*

(86) International application number:
**PCT/EP2007/060129**

(87) International publication number:
**WO 2008/034914 (27.03.2008 Gazette 2008/13)**

(54) **A DISPENSER DEVICE FOR AND A METHOD OF DISPENSING A SUBSTANCE ONTO A SUBSTRATE**

ABGABEVORRICHTUNG UND VERFAHREN ZUR ABGABE EINER SUBSTANZ AUF EIN SUBSTRAT

DISPOSITIF DISTRIBUTEUR ET PROCÉDÉ DE DISTRIBUTION POUR DISTRIBUER UNE SUBSTANCE SUR UN SUBSTRAT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.09.2006 US 826678 P**

(43) Date of publication of application:
**03.06.2009 Bulletin 2009/23**

(60) Divisional application:
**12159108.5 / 2 541 257**

(73) Proprietor: **Clondiag GmbH**
**07749 Jena (DE)**

(72) Inventors:
 • **ERMANTRAUT, Eugen**
  **07743 Jena (DE)**
 • **SCHULZ, Torsten**
  **07749 Jena (DE)**
 • **FISCHER, Joachim**
  **07743 Jena (DE)**
 • **WEICHERDING, Daniel**
  **07743 Jena (DE)**
 • **POSER, Siegfried**
  **07749 Jena (DE)**

 • **KIRST, Matthias**
  **07743 Jena (DE)**

(74) Representative: **Huenges, Martin**
 **Maiwald Patentanwalts GmbH**
 **Elisenhof**
 **Elisenstrasse 3**
 **80335 München (DE)**

(56) References cited:
| WO-A-00/01798 | WO-A-00/08474 |
| WO-A-02/21143 | WO-A-97/46319 |
| WO-A-02/055199 | WO-A-03/013718 |
| GB-A- 2 146 619 | GB-A- 2 408 703 |
| US-A- 3 758 275 | US-A- 5 660 792 |
| US-A- 5 807 522 | US-A- 6 116 297 |
| US-A1- 2003 086 827 | US-A1- 2004 203 175 |
| US-B1- 6 694 197 | |

 • SHALON D ET AL: "A DNA MICROARRAY SYSTEM FOR ANALYZING COMPLEX DNA SAMPLES USING TWO-COLOR FLUORESCENT PROBE HYBRIDIZATION" GENOME RESEARCH, COLD SPRING HARBOR LABORATORY PRESS, WOODBURY, NY, US, vol. 6, no. 7, 1 July 1996 (1996-07-01), pages 639-645, XP000597095 ISSN: 1088-9051

EP 2 064 557 B1

**Description**

This application claims the benefit of the filing date of United States Provisional Patent Application No. 60/826,678 filed September 22, 2006.

FIELD OF THE INVENTION

The invention relates to dispensing substances.

BACKGROUND OF THE INVENTION

Spotting substances onto a substrate is an important technique for manufacturing micro arrays for use in, for instance, biochemistry or for depositing defined amounts of reagents onto surfaces for resuspension.

WO 2000/01798 discloses a ceramic tip and a random access print head for the transfer of microfluidic quantities of fluid. The print head can randomly collect and deposit fluid samples to transfer the samples from a source plate to a target. The print head can also be programmed to create a direct map of the fluid samples from the source plate on the target or to create any desired pattern or print on the target. The tip and print head can be used for a wide variety of applications such as DNA micro arraying and compound reformatting. In one embodiment, the tip is used as a capillary or "gravity" pin to draw or collect source fluid and "spot" or deposit the fluid onto the target via physical contact (touch-off). In another embodiment, the tip is used in conjunction with an aspirate-dispense system to actively aspirate source fluid and deposit the fluid via a contact or non-contact approach. However, the spatial accuracy of supplying a substance to a specific surface portion of a substrate using such a dispensing device may still be insufficient under undesired circumstances. Moreover, the use of one and the same tip for take-up and deposition of different substances may lead to cross-contamination. The necessity to return to the source plate may slow down the process and poses a high demand on evaporation control.

Document US 6,694,197 B1 discloses a single channel reformatter comprising an xy-positioner, a z-positioner, a capillary tube or syringe, a fluid control device and processing and control electronics, wherein the z-positioner is operable to move a liquid transfer vehicle upwardly and downwardly for delivering a liquid to a well of a destination plate.

Document WO 00/01798 discloses a tip design and random access array for microfluidic transfer, wherein a print head collects and deposits fluid samples to transfer samples from a source plate to a target.

Document WO 97/46319 discloses a high-speed liquid deposition device for biological molecule array formation including a pot, an arm and a cross-member, wherein the arm extends along the x-axis with the pot movably connected thereto.

Document US 6,116,297 discloses an article comprising a refillable capillary tube, wherein an actuator accelerates and rapidly decelerates liquid dispensing members, wherein the actuator comprises a biasing member configured as a helical spring, a movable stop member and a fixed stop member.

Document US 5,807,522 discloses a method for fabricating microarrays of biological samples wherein a capillary dispenser is tapped on the support at which biological samples are to be formed, wherein a solenoid is activatable to draw a solenoid piston rapidly downwardly whereupon the dispenser is moved into engagement with the solid support for dispensing a portion of fluid onto the support.

The document by Shalon et al. "A DNA microarray system for analyzing complex DNA samples using two-color fluorescence probe hybridization" (Genome Research, vol. 6, no. 7, pages 639-645) discloses an arraying machine for preparation of DNA microarrays consisting of printing tips mounted apart on a computer controlled robotic stage.

Document WO 03/013718 A1 discloses a liquid delivery apparatus and method, wherein a partial drop of liquid is deposited from a capillary onto a substrate, the capillary and the substrate being capable of x, y and z movement relative to one another under the control of a translation mechanism.

OBJECT AND SUMMARY OF THE INVENTION

In general, the invention relates to dispensing substances (e.g., upon a substrate).

Illustrative Examples of methods of dispensing substances or dispenser devices include:

1. A method, including:

supporting a first member by a second member, the first member including a substance to be dispensed, moving the first and second members toward a surface of a substrate upon which the substance is to be dispensed, prior to contact between the substance and the surface, increasing an absolute difference between a speed of the first member and a speed of the second member, and
after increasing the absolute difference between the speeds, contacting the substance to be dispensed and the surface.

2. A method, including:

supporting a first member by a second member, the first member including a substance to be dispensed,
moving the first and second members along an axis toward a surface of a substrate upon which the substance is to be dispensed,
prior to contact between the substance and the surface, increasing an absolute difference between a velocity of the first member along the axis and a velocity of the second member along the axis, and
after increasing the absolute difference between the velocities, contacting the substance to be dispensed and the surface.

3. A method, including:

moving first and second members toward a surface of a substrate upon which a substance is to be dispensed, the first member including the substance to be dispensed, movement of the first member being controlled at least in part by movement of the second member,
prior to contact between the substance and the surface, increasing an absolute difference between a speed of the first member and a speed of the second member, and
after increasing the absolute difference between the speeds, contacting the substance to be dispensed and the surface.

4. A method, including:

moving a dispensing member along an axis toward a first location of a surface of a substrate upon which one or more substances are to be dispensed,
contacting substance to be dispensed and the first location of the surface,
moving the surface with respect to the dispensing member,
moving the dispensing member along the same axis toward a second location of the surface of the substrate, the second location being spaced apart from the first location on the surface, and
contacting substance to be dispensed and the second location of the surface.

5. A method, including:

supporting a first member by a second member, the first member including a substance to be dispensed,
moving the first and second members toward a surface of a substrate upon which the substance is to be dispensed,
prior to contact between the substance and the surface, decelerating the second member at a higher rate than the first member, and
after decelerating the second member at the higher rate, contacting the substance to be dispensed and the surface.

6. A device, including:

a receiving member configured to receive a substrate having a surface upon which at least one substance is to be dispensed,
a second member movable by an actuator through an actuation motion including a deposition motion toward the surface and, thereafter, a return motion away from the surface,
a first member coupled to the first member, the first member including the substance to be dispensed, wherein:

the actuator is configured to decelerate the second member at a first rate during the deposition motion and the first member is coupled to the second member such that the first member decelerates at a lower rate than the second member, and
following deceleration of the first member at the lower rate, the first member dispenses the substance on the surface.

7. A device, including:

a positioning member configured to receive a substrate having a surface upon which at least one substance is to be dispensed and to position the substrate in each of multiple positions within a first dimension, a dispensing member movable by an actuator through an actuation motion along an axis fixed in space and having a non-zero angle with respect to the dimension, the actuation motion including a deposition motion along the axis toward the surface and, thereafter, a return motion along the axis away from the surface, wherein:

during operation, the positioning member positions the surface in each of multiple positions with respect to the dispensing member and the actuation motion of the dispensing member along the fixed axis dispenses material to each of multiple spaced apart locations of the surface.

Dispenser devices for dispensing a substance onto a substrate, and methods of use are provided as defined in the appended claims.

According to an exemplary embodiment of the invention, a dispenser device for dispensing a substance onto a substrate is provided, the dispenser device comprising a first motion mechanism adapted for moving a container including the substance and the substrate relative to each other within a planar region (it may be sufficient to move only one of the container and the substrate to enable such a planar relative motion between the container and the substrate), and a second motion mechanism adapted for moving the container including the substance and the substrate relative to each other in a direction essentially perpendicular to the planar region (it may be sufficient to move only one of the container and the substrate to enable such a one-directional relative motion between the container and the substrate) to thereby dispense the substance to a surface portion of the substrate, wherein the first motion mechanism and the second motion mechanism are decoupled from one another.

According to another exemplary embodiment of the invention, a dispenser device for dispensing a substance onto a substrate is provided, the dispenser device comprising a gripper unit adapted for gripping a container including the substance and for dispensing the substance onto the substrate.

Features of the described embodiments may be combined.

According to yet another exemplary embodiment of the invention, a dispenser device having the above mentioned features may be used for the manufacture of a micro array.

According to another exemplary embodiment of the invention, a method of dispensing a substance onto a substrate is provided, the method comprising moving the substrate and a gripper unit adapted for gripping a container including the substance relative to each other within a planar region, moving the gripper unit and the substrate relative to each other in a direction essentially perpendicular to the planar region to thereby dispense the substance to a surface portion of the substrate, wherein a first motion mechanism for performing the motion within the planar region and a second motion mechanism for performing the motion in the direction essentially perpendicular to the planar region are decoupled from one another.

According to yet another exemplary embodiment of the invention, a dispenser device for depositing a substance onto a substrate is provided, the dispenser device comprising a drying mechanism adapted for promoting drying of at least a part of a solvent dispensed onto the substrate together with the substance, wherein the drying mechanism comprises a ventilation element adapted for providing the substance and the solvent dispensed onto the substrate with a fluid stream for removing at least a part of the solvent from the substrate. This embodiment may be combined with any feature described below.

According to yet another exemplary embodiment of the invention, a method of dispensing a substance onto a substrate is provided, the method comprising depositing a solution comprising the substance and a solvent onto the substrate, and removing at least a part of the solvent from the substrate by drying the deposited solution, wherein the drying comprises providing the deposited solution with a ventilating fluid stream. This embodiment may be combined with any feature described below.

According to yet another exemplary embodiment of the invention, a dispenser device for dispensing a substance onto a substrate may be provided, the dispenser device comprising a spotter head for carrying a capillary comprising the substance, and a spotter arm on which the spotter head is mounted in such a manner that the spotter arm is adapted for carrying the spotter head when approaching the substrate or departing from the substrate and that the spotter arm is mechanically decoupled from the spotter head when the capillary carried by the spotter head abuts against the substrate. This embodiment may be combined with any feature described below.

The term "dispenser device" may particularly denote any device for emitting or applying any substance to a specific region in space, particularly onto a defined surface portion of a substrate.

The term "substance" may particularly denote any solid, liquid or gaseous substance, or a combination thereof. For instance, the substance may be a liquid or suspension, furthermore particularly a biological substance. Such a substance may comprise proteins, polypeptides, nucleic acids, lipids, carbohydrates etc. In particular, the substance may be a probe.

The term "gripper unit" may include any element which is capable of gripping, catching, or grasping the container in an automated manner. For instance, such a gripper unit may be part of a robot. Examples for gripping mechanisms are cooperating jaws, a row of clips, a series of fingers, a mechanical- or vacuum-actuated device located at the end of a robot arm, a clamp that grabs the container, etc.

The term "motion mechanism" may particularly denote any mechanical drive which allows a motion along one or two axes in space, that is to say an apparatus capable of enabling or controlling such a motion.

The "substrate" may be made of any suitable material, like glass, plastics, metal, or a semiconductor. This term may cover any essentially planar (i.e. two-dimensional) or non-planar (i.e. three-dimensional) surfaces. Particularly, embodiments of the invention may make it possible to spot a substance onto a surface of a three-dimensional object. An example for such a three-dimensional object is a cavity or well (shaped, for instance, like a semi-bowl) comprising a reaction chamber (in which a biological, chemical or biochemical reaction may occur) comprising fluidic paths (like channels). Another example for such a three-dimensional object is a cylinder or barrel having a curved surface onto which a substance is spotted. Embodiments of the invention may also allow "painting" structures onto a planar or non-planar surface of the substrate. For this purpose, a distance between a surface of the substrate and an emission tip of a substance container may be kept constant (for instance sufficiently small to allow for spotting), and a geometrical structure (like a stripe or a cross) to be painted onto the surface is formed by moving a table carrying the substrate relative to the container along one or two dimensions perpendicular to the distance direction.

The term "decoupled" may particularly denote that the two motion mechanisms may be controlled or actuated separately from one another. In other words, the operation of one of the two motion mechanisms may be performed without influencing the other one. This may allow considering both mechanisms separately, simplifying control and thereby improving accuracy.

In accordance with the invention, a program element may be provided, which, when being executed by a processor, is adapted to control or carry out a method of dispensing a substance onto a substrate having the features of claims 6 or 7.

In accordance with, a computer-readable medium (e.g. a CD, a DVD, a USB stick, a floppy disk or a harddisk) may be provided, in which a computer program is stored which, when being executed by a processor, is adapted to control or carry out a method of dispensing a substance onto a substrate having the features of claims 6 or 7.

The control of the dispensing scheme according to embodiments of the invention can be realized by a computer program, i.e. by software, or by using one or more special electronic optimization circuits, that is in hardware, or in hybrid form, that is by means of software components and hardware components.

According to an exemplary embodiment, an apparatus for dispensing a substance (for instance a fluidic and/or a solid substance, wherein the term "fluidic" may cover liquid and/or gaseous substances) onto a substrate (for instance a micro array) is provided. Such a dispenser device comprise a gripper unit which may be actuated to hold a container housing the substance to be dispensed at a specific and/or defined portion or location or spot of the substrate, for example to generate a matrix- or array-like pattern of the substance on the substrate. A two-dimensional motion along or parallel of the surface of the substrate to be dispensed with the substance may be scanned by a first motion mechanism (for example a movable guide unit comprising a step motor). Such a mechanism may allow a motion in a two-dimensional area. In contrast to this, a motion in a direction perpendicular to this scanning plane is enabled by the second motion mechanism by means of which a gripper unit may be lowered or raised so as to be approached towards, to abut or to contact the surface of the substrate for emitting the substance using the impinging force or velocity or acceleration.

According to an exemplary embodiment, it may be advantageous that the two-dimensional motion and the motion in the direction perpendicular thereto are functionally decoupled from one another which may allow a refined control of the spatial movement, thereby increasing the accuracy of the system. Therefore, in contrast to conventional approaches in which any three-dimensional control of a substance containing element may be controlled together, embodiments of the invention specifically decouple the one motion mechanism from the other one, thereby simplifying and improving control.

Thus, according to an exemplary embodiment, a capillary spotter is provided capable of performing a spotting procedure, particularly in a construction using a gripper for gripping one or more capillaries.

In the event that a single capillary emits substance in an inappropriate manner, after-spotting is possible in order to correct spotting mistakes. For instance, after each spotting procedure, an optical control may be performed whether the spotting process has been performed correctly. Erroneous spotting may have different origins, like the deposition of no or an insufficient amount of substance, deposition of the substance at a wrong position, or a spot having a too large dimension. Particularly in case of no or an insufficient amount of substance deposition, the error may be compensated by after-spotting.

For example, about 0.1 $\mu$l to about 5 $\mu$l, preferably about 3$\mu$l to about 4 $\mu$l and more preferably about 3.9 $\mu$l of a substance may be filled in a capillary, and this volume may be sufficient for up to approximately 10.000 spots.

Therefore, according to exemplary embodiments, a large number of individual spots may be provided on the substrate, for instance for high throughput screening or micro array applications.

With embodiments of the invention, a loss of substance material may be efficiently suppressed or avoided, since the substance may be filled in a capillary-like container using a pipette or the like, which is an efficient way of transferring substances. In this context, capillary forces may be used.

As such a container for the substance, a capillary may be used which, when having a sufficiently small outlet opening, may provide a self-closure effect due to a salt-crust which may be formed automatically at such a tip for example due to evaporation effects of fluid at such a tip. In order to selectively remove such a salt-crust, the crust may be removed using a vacuum apparatus or by dipping the tip in a liquid solution. In order to avoid a contamination, the liquid solution may be a one-way liquid solution, for instance a micro titer plate in which individual wells are filled with the liquid solution (like water) and each well is used only once. A salt-crust may also be removed by a mechanical treatment, for instance by toughly hitting a ground surface ("prespotting slide").

According to an exemplary embodiment, it may be sufficient to enable a motion of the gripper without needing an active electrical drive for the lowering motion, for instance making use of a gravitational force. A free fall of the gripper is possible and may be restricted by corresponding stop elements, generating a spatially dependent magnetic force for decelerating a falling gripper unit. Embodiments of the invention are not restricted to arrays in which a large number of surface portions has to be covered with a substance, but may be used for any deposition technique depositing a substance on a substrate.

The motion in an xy-plane perpendicular to the gripper lowering z-direction may be performed with a two-dimensional arm or positioning table which may be provided separately from the gripper. Before applying the substance to the surface portion of the substrate, this fastening may be released so that the gripper may fall down. Some damping feature may be realized by magnetic repulsive force generated by the pair of magnets. The deeper the arm is falling, the larger is the impulse, with which the needle or capillary abuts against the surface of the substrate, and therefore the larger is the amount of substance to be deposited. Therefore, according to an exemplary embodiment, the needle or capillary itself is moved only in said direction, which allows a significantly improved accuracy, because the arm has only be moved relatively to the substrate in x- and y-direction (for example by moving the substrate or a substrate carrying table and by keeping the arm at a fixed xy-position) which allows to decouple two motion components from one another, increasing the accuracy.

The lowering procedure may be performed relatively fast so that a drop at the tip may be ejected from or torn off the gripper. A screw or a similar element provided at the gripper may serve as a stopper when pulling up the arm, indirectly moving the gripper, in order to suppress oscillations resulting from repulsive forces of the magnets. Such oscillations may have the undesired effect that the capillary would abut a plurality of times against the surface.

Manufacturing biochips and/or micro arrays may be performed using dispenser devices, spotters and/or micro array devices. A basic principle of such devices is the deposition of substances on a substrate, usually at a defined location or position or spot on the substrate. The spotting may be realized by the positioning of the substrate and the spotting device in x-, y-, and z-direction.

A spotting device may comprise a holder for one or more spotting needles. The spotting needles may be immersed into a substance reservoir and may be subsequently moved or displaced over the substrate. During a lowering motion, the moment of inertia or torque of inertia of the substance at and/or in the needles of the capillaries and the electrostatic interaction between the substance and the substrate surface may result in the deposition of very small amounts of substances on the substrate.

Other spotting techniques may use micro-capillaries, print matrices, print nozzles and other dispensing and aspirating devices which can be used instead of needles. The deposition of the substances is, in this context, realized by a piezoelectric, electro-mechanic technique and/or using pressurized air.

However, a shortcoming of conventional techniques may be that it is difficult to achieve the desired accuracy and/or quality of the arrays needed for biological and/or diagnostic purposes. When using needles, undesired effects may occur during the spotting, like evaporation of components of the substance, which may result in concentration gradients of the substance to be deposited. Other problems when using needles are an insufficient accuracy resulting from the bearing of capillaries, and an undefined amount of deposited substance. Furthermore, a contamination of the needles during the spotting procedure is one of the problems when using identical needles for different substances. Such a contamination cannot be excluded with sufficient reliability when applying washing procedures or rinsing procedures.

Apart from this, missing spots may occur, which allows the implementation of conventional spotting technologies for manufacturing arrays for diagnostic purposes only in a limited manner.

Print heads may allow for spotting a plurality of substances in parallel. In a similar manner like print nozzles, they may require a complex control device and a complex microfluidic architecture.

When manufacturing diagnostic arrays, it may be important to have a reliable and secure manufacturing process, which is also in compliance with legal requirements with regard to product safety.

According to an exemplary embodiment of the invention, a contamination-free, highly precise and reproducible deposition of substances on surfaces may be made possible. Examples for such substances are biological substances like proteins, peptides, nucleic acids such as RNA and/or DNA and fragments and/or analogs thereof. Such a manufacturing method may furthermore enable the execution of online quality control procedures for each individual spot and an automatically repeated spotting or subsequent spotting or post-spotting, regardless of the used substrate.

An important field of application of exemplary embodiments of the invention is the, preferably accurate, deposition of substances (or mixtures of substances) on surfaces, wherein the substances may be available in a solution prior to the deposition, and may dry rapidly and in a defined manner after deposition on the surface.

Within the scope of the present invention, a capture molecule or a probe or a probe molecule or a molecular probe is understood to denote a molecule, which is used for the detection of other molecules due to a particular characteristic binding behavior or a particular reactivity. Each type of molecules, which can be coupled to solid surfaces and have a specific affinity, can be used as capture molecules laid out on the array. In a preferred embodiment, these are biopolymers, in particular biopolymers from the classes of peptides, proteins, antigens, antibodies, carbohydrates, nucleic acids, and/or analogs thereof and/or mixed polymers of the above-mentioned biopolymers. Particularly preferably, the capture molecules are proteins and/or nucleic acids and/or nucleic acid analogs.

In particular, nucleic acid molecules of defined and known sequence, which are used for the detection of target molecules in hybridization methods, are referred to as capture molecules. Both DNA and RNA molecules can be used as nucleic acids. For example, the nucleic acid probes or oligonucleotide probes can be oligonucleotides having a length of 10 to 100 bases, preferably of 15 to 50 bases, and particularly preferably of 20 to 30 bases. Typically, according to the present invention, the capture molecules are single-stranded nucleic acid molecules or molecules of nucleic acid analogs, preferably single-stranded DNA molecules or RNA molecules having at least one sequence region, which is complementary to a sequence region of the target molecules. Depending on detection method and use, the capture molecules can be immobilized on a solid support substrate, for example in the form of a micro array. Furthermore, depending on the detection method, they can be labeled radioactively or non-radioactively, so that they are detectable by means of detection methods conventional in the state of the art.

Within the scope of the present invention, a target or a target molecule is understood to denote a molecule to be detected by means of a molecular probe. In a preferred embodiment of the present invention, the targets to be detected are nucleic acids. However, the probe array according to the present invention can also be used in an analogous manner for the detection of peptide / probe interactions, protein / probe interactions, carbohydrate / probe interactions, antibody / probe interactions etc.

If, within the scope of the present invention, the targets are nucleic acids or nucleic acid molecules, which are detected by means of a hybridization against capture molecules laid out on a probe array, said target molecules normally comprise sequences of a length of 40 to 10,000 bases, preferably of 60 to 2,000 bases, also preferably of 60 to 1,000 bases, particularly preferably of 60 to 500 bases and most preferably of 60 to 150 bases. Optionally, their sequence comprises the sequences of primers as well as the sequence regions of the template, which are defined by the primers. In particular, the target molecules can be single-stranded or double-stranded nucleic acid molecules, one or both strands of which are labeled radioactively or non-radioactively, so that they are detectable by means of a detection method conventional in the state of the art.

According to the present invention, a target sequence denotes the sequence region of the target, which is detected by means of hybridization with the capture molecule. According to the present invention, this is also referred to as said region being addressed by the capture molecule.

Within the scope of the present invention, a substance library is understood to denote a multiplicity of different capture molecules, preferably at least two to 1,000,000 different molecules, particularly preferably at least 10 to 10,000 different molecules, and most preferably between 100 to 1,000 different molecules. In special embodiments, a substance library can also comprise only at least 50 or less or at least 30,000 different molecules. Preferably, the substance library is laid out in the form of an array on a support inside the reaction chamber of the device according to the present invention.

Within the scope of the present invention, a probe array is understood to denote a layout of molecular probes or a substance library on a support, wherein the position of each capture molecule is defined separately. Preferably, the array comprises defined sites or predetermined regions, so-called array elements, which are particularly preferably laid out in a particular pattern, wherein each array element usually comprises only one species of capture molecules.

Herein, the layout of the molecules or capture molecules on the support can be generated by means of covalent or non-covalent interactions. Herein, the capture molecules are laid out at the side of the support facing the reaction chamber. A position within the layout, i.e. within the array, is usually referred to as spot.

Within the scope of the present invention, a position, a location, an array element, or a predetermined region, or a spot, or an array spot is understood to denote an area, which is determined for the deposition of a capture molecular, on a surface; the entirety of all occupied array elements is the probe array.

Within the scope of the present invention, a support element, or support, or substance library support, or substrate is understood to denote a solid body, on which the probe array is set up. Support, usually also referred to as substrate or matrix, can for example denote an object support or a wafer or ceramic materials. In a special embodiment, the capture molecules can also be immobilized directly on the first surface, preferably on a partition of the first surface.

The entirety of molecules laid out in array layout on the substrate or on the detection surface, or the substance library laid out in array layout on the substrate or the detection surface and of the support or substrate is also often referred to as "chip", "micro array", "DNA chip", "probe array", "array", "biochip" etc.

Conventional arrays or micro arrays within the scope of the present invention comprise about 50 to 10,000, preferably 150 to 2,000 different species of capture molecules on a, preferably square, surface of, for example, 1 mm to 4 mm x 1 mm to 4 mm, preferably of 2 mm x 2 mm. In further embodiments within the scope of the present invention, micro arrays comprise about 50 to about 80,000, preferably about 100 to about 65,000, particularly preferably about 1,000 to about 10,000 different species of capture molecules on a surface of several mm$^2$ to several cm$^2$, preferably about 1 mm$^2$ to 10 cm$^2$, particularly preferably 2 mm$^2$ to 1 cm$^2$, and most preferably about 4 mm$^2$ to 6.25 mm$^2$. For example, a conventional micro array has 100 to 65,000 different species of capture molecules on a surface of 2 mm x 2 mm.

According to an exemplary embodiment, a device is provided allowing the defined deposition of substances on micro arrays. Such a device may comprise one or more containers (for instance capillaries) which may have a removable cap at a blunt end thereof and which may have a self-closing effect at a pointy end. The capillary or capillaries may be stored in a rack which may be provided within an identification matrix, i.e. each position in the rack may be assigned to a specific one of the capillaries.

Furthermore, the device may comprise a specifically designed gripper arm which may grip one specific capillary out of the rack and may be guided subsequently relative to a substrate (for example by moving the arm and by keeping the substrate or a substrate-carrying table at a fixed xy-position or by moving the substrate or a substrate carrying table and by keeping the arm at a fixed xy-position) so that one or more spots may be deposited at defined positions of the substrate. The deposition of the substances may be monitored in real time using a camera or any other appropriate detection mechanism. When errors occur during the spotting procedure, for instance because a substance has not been deposited correctly (with regard to position, amount and/or shape), for instance since the capillary has not physically contacted the surface in a correct manner, such an event may be captured by the camera. Software may evaluate, for example essentially in real time, the images acquired by the camera. In case of detecting an error, the software may initiate a defined repeated spotting at the position where the error has been determined. When a substance is to be deposited at a specific position, but the spot is not compatible with predetermined quality requirements or parameters, such an erroneous position may be documented in a database connected with the software application. The entire process may be controlled using a computer, and a human user may or may not be involved in such a procedure.

For instance, in a scenario in which a user desires to manufacture a specific array, the spotting procedure may be as follows: The user may select a corresponding layout of capture molecules on the array by operating a control software, for instance using a graphical user interface (GUI). In this layout, it may be defined in which position which substance, preferably a specific species of capture molecules, shall be deposited in which quantity. The control software may now use a rack in which containers (capillaries) are accommodated which are needed for spotting. The user may bring the rack into a position provided for this purpose, and may start with spotting procedure (for instance by clicking on an "O.K." button, or the like). After initializing the device, a container may be moved towards the gripper arm. The gripper arm grips the cap of the container closing one end of the container, removes the cap from the container and stores the cap on a holding device provided for this purpose. Subsequently, the gripper may grip the container, may take it out of the rack and may (optionally) condition/activate the container to prepare it for a subsequent substance deposition procedure. Such activation may remove (solid) material which may possibly be located at an outlet portion of the container for enabling a fluid communication via the outlet portion. In other words, this may serve for opening the capillary (which may be blocked) particularly due to an evaporation of liquid contributions of the substance at a tip of the capillary. A table carrying the substrate may be moved to the position of the gripped container within an xy plane. Subsequently, the gripper unit touches down the capillary onto the surface with an adjustable defined velocity and/or acceleration.

The micro-capillary used for spotting may be a conventional micro-capillary made of ceramics, which may be used for instance in microelectronics. Spotting with such capillaries may be done with a one capillary or with a bundle of capillaries. Capillaries may be cleaned or rinsed between individual spotting procedures, and subsequently filled with another solution.

According to other exemplary embodiments of the invention, exactly one capillary may be filled with the solution to be spotted onto the surface, and may be subsequently emptied completely or partially using one or several spotting procedures. The capillary may be disposable when being emptied. For storing a capillary which is not emptied completely, the capillary can be provided with the cap to close one end thereof, and can be stored in a suitable environment, in order to suppress or minimize evaporation effects.

Interestingly, it could be observed that, under specific circumstances, a salt-crust is automatically formed over the tip of the capillary, thereby closing an end of the capillary. Such a salt crust may be produced by solidifying a liquid solution, particularly when a liquid solvent evaporates. For spotting, the capillary may then be activated or conditioned using an activator unit. This can be a vacuum device which sucks off the crust from the capillary tip, thereby performing a suction cleaning. It is also possible to immerse the capillary briefly into a water bath, and to optionally dry the capillary subsequently in a vacuum device.

The capillary may be ideally used for spotting of substances such as capture molecules. In a specific embodiment, it may have a self-closing feature (since salt crystals may be formed automatically due to the configuration according to the invention). Such a capillary may have a volume of about 0.1 $\mu$l to about 10 $\mu$l, preferably about 1 $\mu$l to about 7 $\mu$l, more preferably about 2 $\mu$l to about 5 $\mu$l and most preferably about 3.9 $\mu$l. With such a volume, it may be possible to perform 5.000 to 10.000 spots.

In order to enable a contamination-free spotting, it is possible to use only a single capillary filled with a respective spotting substance, per substance to be spotted. Therefore, rinsing procedures may be omitted. Simultaneously, contamination may be prevented efficiently.

The amount of the substance to be deposited per spot may depend on a number of factors. Such factors may be the composition and the viscosity of the spotting substance, the shape and the surface properties of the needle and/or of the capillary, the shape and the surface property of the substrate. In a resting state of the capillary, the substance volume per spot may depend on such properties, particularly on the surface tension of the substance. During spotting, the force acting in a z-direction (usually, but not necessarily, a vertical direction) may also be of relevance. It is believed that, the larger the acceleration when depositing and abutting the capillary holder on the substrate surface, the larger is the force acting onto the substance in the capillary. It may further be considered for designing a spotting scheme that the volume in the substance in the capillary becomes smaller during spotting, therefore the inertia of the substance may be modified.

The device may serve for a linear motion of a capillary and may have the advantage of an automatic gripping/changing of the capillary. Furthermore, the force when touching or contacting the surface may be small. Such a force and a velocity may be adjustable, so that the hit between the capillary and the surface may be adjusted and/or adapted, for instance using the magnet configuration.

Next, further exemplary embodiments of the dispenser device(s) will be explained. However, these embodiments also apply for the method, for the program element and for the computer-readable medium.

The first motion mechanism may enable a two-dimensional (planar) motion in a plane (for instance defined by an x-axis and a y-axis), whereas the second motion mechanism may provide a one-dimensional (linear) motion along a direction (for instance defined by a z-axis which may be a vertical axis in a laboratory system).

In the following, the term "move" will be used which may particularly indicate a dynamic (moved) property relative to a laboratory system of a laboratory in which the dispenser device is installed. Beyond this, the term "fixed" will be used which may particularly indicate a static (resting) property relative to a laboratory system of a laboratory in which the dispenser device is installed.

The first motion mechanism may be adapted to move the gripper unit within the planar region, whereas the substrate is maintained fixed. Thus, according to the described embodiment, the first motion mechanism actively drives the gripper unit to be moved, but does not actively drive the resting substrate or a substrate holder on which the substrate may be mounted.

Alternatively, the first motion mechanism may be adapted to move the substrate within the planar region, whereas the gripper unit is maintained fixed. Thus, according to the described embodiment, the first motion mechanism actively drives the substrate to be moved (or a substrate holder on which the substrate may be mounted), but does not actively drive or move the resting gripper unit.

Furthermore, the second motion mechanism may be adapted to move the gripper unit in the direction essentially perpendicular to the planar region, whereas the substrate is fixed in the direction essentially perpendicular to the planar region. Thus, according to the described embodiment, the second motion mechanism actively drives the gripper unit to be moved (for instance in a vertical direction), but does not actively drive the substrate or a substrate holder on which the substrate may be mounted. Such an embodiment may be preferred, since moving the gripper unit may involve motion of a significantly smaller mass as compared to a motion of the substrate usually provided on a substrate holder or table. Moving a reduced mass may allow to increase the positional accuracy.

However, alternatively, it is possible that the second motion mechanism is adapted to move the substrate in the direction essentially perpendicular to the planar region, whereas the gripper unit is fixed in the direction essentially perpendicular to the planar region.

It is also possible that the gripper unit and the substrate are both moved by the first motion mechanism so as to be moved in the surface plane of the substrate. Additionally or alternatively, it is also possible that the gripper unit and the substrate are both moved by the second motion mechanism so as to be moved perpendicular to the surface plane of the substrate.

A preferred embodiment may combine a motion of the substrate (holder) in the planar region or (horizontal) plane with the gripper unit being fixed within this plane, in combination with a motion of the gripper unit in the direction which is orthogonal to the planar region or (horizontal) plane with the substrate (holder) being fixed within this direction.

Such an embodiment may involve a two-dimensional step motor drive for the substrate and a vertical motion mechanism for the gripper unit which may allow for an accurate positioning and therefore substance application on the substrate.

The first motion mechanism (which may also be denoted as a movable guide unit, like a step motor arrangement) may be movable exclusively within the planar region. In other words, any motion apart from the motion in this region may be restricted or limited by the first motion mechanism. This may allow to functionally decouple the planar motion from a lowering motion of the gripper unit. A two-dimensional spotting position adjustment may be performed with a significantly improved accuracy compared to a three-dimensional motion, since the corresponding control may be easier and faster.

The second motion mechanism may be adapted to perform a motion of the gripper unit relative to the substrate exclusively in the (linear) direction essentially perpendicular to the planar region. Therefore, the motion of the gripper unit may be provided only along a linear direction, which may be limited, for instance, by any suitable bearing mechanism.

The second motion mechanism may be adapted to perform a motion of the gripper unit to abut against the surface portion of the substrate to thereby dispense the substance to the surface portion of the substrate. In other words, particularly the contact between the container and the surface of the substrate may initiate the substance dispensing, allowing to have a substance distribution characteristic which is controllable with high accuracy, particularly with respect to the abutting force, area, acceleration, velocity, etc.

Adjusting one or more of these parameters may allow defining the amount of substance to be deposited at a specific portion. Different and preferably defined portions of the surface of the substrate may be covered with the substance in different densities, or with an identical density.

The gripper unit may be adapted for gripping a capillary as the container. A capillary may be particularly denoted as an essentially hollow cylindrical element which may have a tapered end portion and an oppositely oriented end portion for filling in the fluid. Such a capillary may be made of a ceramics, glass, a plastic material, etc.

The gripper unit may be adapted for gripping exactly one container at a time. Therefore, it is possible that the gripping unit only grips a single capillary so that only one substance is provided at a time. Consequently, any contamination with other substances may be efficiently prevented.

The gripper unit may comprise two gripper jaws. Such jaws may interact to hold the container: At least one of the gripper jaws may have an inner profile, which may be adapted in accordance with a surface property of the capillary to be gripped so as to enable a proper gripping. For instance, a V-shaped gripping portion may be provided which may further increase the flexibility in gripping different capillaries. The gripper jaws may grip the capillary particularly at three points or at four points, allowing a stable gripping.

The dispenser device may comprise the second motion mechanism adapted for moving the gripper unit relative to the substrate in the direction essentially perpendicular to the planar region. Such a motion mechanism may include a drive and a position control to define the position of the gripper device in a vertical direction.

More particularly, the second motion mechanism comprises a drive unit and an adapter, the drive unit being adapted for mechanically driving the adapter which is coupled to the gripper unit. Therefore, the drive unit is connected with the gripper unit via an adapter, for instance an arm, transferring the motion force from the drive unit to the gripper unit.

The second motion mechanism may comprise a bearing coupled to the gripper unit, wherein a motion of the gripper unit may be limited to a linear motion by the bearing. Therefore, such a bearing (or lateral guide unit) may be a linear guide restricting the motion of the gripper with respect to the bearing to one dimension.

The second motion mechanism further comprises a first magnetic element coupled to the adapter and a second magnetic element coupled to the gripper unit, the first magnetic element and the second magnetic element being adapted to generate a repulsive force. Therefore, in a default state, the gripper unit may be located spaced apart from the adapter, which may allow providing some kind of magnetic damping effect. Such a magnetic damping may be supplemented by a spring damping, or the like. However, a magnetic damping may have the advantage of a contact-free and therefore frictionless damping.

The two magnetic elements may be realized, for instance, as permanent magnets (like ferromagnets), or may be implemented as electromagnets. Applying a current to electromagnets may then allow flexibly using the electromagnets as repulsive element or alternatively as attractive elements.

The first magnetic element and the second magnetic element may be adapted to generate a repulsive force in a direction counteracting a gravitational force acting on the gripper unit. For example, this force may generate a force which tends to move the gripper unit away from the ground, whereas a gravitational force tends to move the gripper unit towards the ground.

The bearing may be coupled to the gripper unit by a pneumatic coupling, by an electrical coupling, and/or by a hydraulic coupling.

The dispenser device may comprise a stopper element adapted to define a lower limit for a distance between the first magnetic element and the second magnetic element, thereby limiting the repulsive force between the first magnetic element and the second magnetic element. Such a stopper device may be realized as a screw, for example, and may serve as a spacer to avoid an excessive repulsive force between the two magnets when approaching each other. This may allow suppressing or eliminating an undesired oscillation of the system under the influence of the various forces, particularly of the repulsive force of the two magnets and the gravitation.

The first motion mechanism and the second motion mechanism may be operable independently from one another. This independent operation may allow decoupling the motion in the xy-plane from the motion in the z-direction, thereby increasing the accuracy, since a one- or two-dimensional positional control may be much easier than a three-dimensional control. Therefore, the functional decoupling of the first and the second motion mechanism from one another may be of particular advantage.

The first motion mechanism may comprise a first step motor adapted for moving the gripper unit relative to the substrate along a first direction within the planar region and/or may comprise a second step motor adapted for moving the gripper unit relative to the substrate along a second direction within the planar region. The first direction and the second direction may be perpendicular to one another. Such a stepper may be a motor (especially an electric motor) that moves or rotates in small discrete steps. A stepper motor may therefore particularly be denoted as a type of electric motor which may be used when something has to be positioned very precisely or rotated by an exact angle. For example, a stepper motor may be a brushless, synchronous electric motor that can divide a full rotation into a large number of steps, for example, some hundred steps.

At least one of the group consisting of the first step motor and the second step motor may be controllable based on a distance or position measurement along at least one of the group consisting of the first direction and the second direction performable using a marker measurement, particularly an optical marker measurement. Such a distance measurement or position measurement may be performed using an element on which a plurality of (for example equidistantly) spaced markers are provided. Such markers may be structures (like lines) having optical transmission properties which differ from portions between adjacent markers. By counting a number of markers which are passed by any moving component of the dispensing device (for example the substrate to be dispensed, a substrate holder for holding the substrate, a table on which the substrate is mounted, the gripper unit, etc.), a highly precise position information may be obtained which may, in turn, be used for controlling motion, particularly in the planar area.

Such a counting may be based on an optical detection principle, for example using a light source and a light detector (like a photodiode) for detecting a light-dark pattern when the light detector (and optionally also the light source) move relative to the element on which the plurality of spaced markers are provided. The markers may be transparent, and the portions between adjacent markers may be opaque, or vice versa. As an alternative to an optical detection, other detection principles may be implemented, like a magnetic detection. In such a scenario, the markers may be made of a magnetic material. More generally, the markers may be made of a material differing concerning their magnetic properties from the material between the markers. The light detector may then be substituted by a magnetic detector, like a coil or a Hall probe.

The container may comprise a capillary, particularly a capillary having a tapered substance outlet portion (or tip) through which the substance is directable onto the substrate. Such a tapered substance outlet portion may be a tip at the end of the capillary which is adapted to abut against the surface, for dispensing a fluid to be emitted from this tapered substance outlet portion, supported by the physical contact or hit.

Apart from this, the capillary may have a tubular portion (having an essentially constant diameter which may be much larger than the diameter at the tip portion) at which the capillary can be gripped by the gripper unit. At a top of the tubular portion, an inlet opening may be foreseen through which a substance may be inserted in the capillary, for instance using a pipette or a conduit to be connected to the tubular portion. Beyond this, the capillary may comprise a removable cap adapted for closing an opening of the capillary facing the tapered substance outlet portion. Such a removable cap may prevent the sample stored within the substance from being evaporated, and may be adapted to be removable by the gripper unit. This may further increase the degree of automatization of the system.

The dispenser device may comprise an activator unit (which may also be denoted as a conditioning unit) adapted for activating (or conditioning) the tapered substance outlet portion to thereby enable the substance to be released through the tapered substance outlet portion. Such an activator unit may ensure that the tapered substance outlet portion or tip is clean and ready for emitting the substance. In special scenarios, specifically when a salt comprising solution is used as a substance, it may happen that a salt crust is formed at the small tip, due to evaporation effects or the like. In order to suppress such effects, the activator unit may be used to remove such a solid deposit from the tapered substance outlet portion.

As an activator unit, it is possible to use a one-way liquid bath (which may be realized for instance as a matrix-like array of wells filled with water, wherein each well is used only once for cleaning the contaminated tip) in which the tip may be immersed and/or a vacuum element adapted for applying a negative pressure to the tapered substance outlet portion so as to suck off the salt crust or any other impurity.

The dispenser device may further comprise a rack adapted for accommodating the container and at least one further container, usually for accommodating a large number of containers. Such a rack may have an essential matrix-like arrangement of the containers and may be adapted to store a larger number of containers.

Beyond this, a camera or any other (for instance optical) detection device may be provided for inspecting the substrate for determining whether the substance has been dispensed to the surface portion of the substrate successfully. The term "successfully" may in this context particularly denote that the actually dispensed substance is in sufficient accordance with a desired amount and a desired spatial distribution of the substance, e.g. in a micro array format. When the actual result in sufficient accordance with desired properties, the spotting procedure may be accepted to be successfully, otherwise measures may be taken to compensate a non-successful deposition. As an alternative to an optical detection, the detection of a successful/non-successful dispensing procedure may be performed by measuring a surface topology of the substrate portion on which the substance has been provided. A result of such a measurement may allow to derive information with regard to the amount of substance spotted onto a specific portion of the substrate, and consequently to derive information indicative of the success of the spotting procedure.

For example, the dispenser device may be adapted in such a manner that, when the camera has inspected that the substance has not been dispensed to the surface portion of the substrate successfully, the gripper unit is again moved in the direction essentially perpendicular to the planar region to thereby dispense again substance to the surface portion of the substrate. Such a "post-spotting" or "spotting correction" procedure may allow to repair a micro array with a plurality of spots, even when specific spots have not been applied with sufficient accuracy. Therefore, the gripper unit may be guided at least a second (and if desired a third, fourth, ...) time to the specific position to deposit further material there to correct for spotting deficiencies.

The dispenser device may also be adapted in such a manner that, when the camera has inspected that the substance has not been dispensed to the surface portion of the substrate successfully, this surface portion is categorized accordingly. For instance, this information may be provided to a database which may store the information which of the positions of a micro array have not been spotted with success. This may allow to plan a post-spotting, to prevent use of such low quality portions, etc.

The detection unit and the gripper unit may be mounted in a manner so that the gripper unit is movable in the direction essentially perpendicular to the planar region and the detection unit is spatially fixed at least in the direction essentially perpendicular to the planar region. Camera and gripper unit may be mounted both along the z-axis, or with a predetermined offset with regard to one another. According to one embodiment, the detection unit and the gripper unit may be mounted both along the direction essentially perpendicular to the planar region on opposing sides of the substrate. According to this embodiment, in which the substrate may be optically transparent, camera and gripper unit may be mounted both along the z-axis on opposing sides of the substrate. According to another embodiment, the detection unit and the gripper unit may be mounted with a predetermined offset to one another along the direction essentially perpendicular to the planar region on a common side of the substrate. According to this embodiment, in which the substrate needs not be optically transparent, camera and gripper unit may be mounted with a predetermined offset to one another along the z-axis on the same side of the substrate. When an erroneous position of the gripper unit/capillary is detected by the camera, an automatic mechanism may be activated for.correcting the position.

The dispenser device may comprise a control unit adapted for centrally controlling at least one of the components of the group consisting of the gripper unit, the first motion mechanism, the second motion mechanism, and the camera. Such a control unit may be a computer or a microprocessor or a CPU (central processing unit). Such a control unit may be coupled in a wired or wireless manner to the other components. The control unit may also be located remotely, so as to be controlled via a network, for instance via the Internet or a company internal intranet.

The dispenser device may further comprise a user device allowing a user to define a manner of dispensing the substance onto the substrate. In other words, the user device may enable a user to program the dispenser device so as to dispense the substrate onto the surface in a defined manner. Such a user interface or I/O device may include a graphical user interface (GUI) having a display unit like an LCD, a plasma device, or a cathode ray tube. Furthermore, input elements can be provided at the user interface like the keypad, joystick, buttons, a trackball, or even a microphone of a voice recognition system.

According to one exemplary aspect of the invention, a capillary may be used to support a reservoir function of a container. In other words, a narrow tip at an end portion of a capillary may be automatically "sealed" by evaporation effects after a spotting procedure. The seal in form of a solidified particle at the tip of the capillary may then be selectively removed, for instance by dipping the tip in a liquid cleaning solution. With such a container-capillary configuration, the gripper may be capable of gripping and spotting by means of any desired container, as long as this container is still appropriate for spotting.

According to an exemplary embodiment of the invention, non-consumed spotting solution may be recovered, that is to say may be refilled in a reservoir.

Moreover, according to an exemplary embodiment of the invention, a means to protect the solution to be deposited from evaporation is being provided.

According to an exemplary embodiment of the invention, a disposable capillary tip for substance disposal is provided.

The first motion mechanism and the second motion mechanism may be adapted to control a motion of the gripper unit and/or the substrate relative to each other to dispense the substance to the surface portion of the substrate to form a stripe. Such a stripe may be an essentially two dimensional structure in a surface plane of the substrate, for instance a linear stripe having beginning and end. Alternatively, a spot may be formed which may be an essentially one dimensional structure in a surface plane of the substrate, for instance a dot of substance.

The first motion mechanism and the second motion mechanism may be adapted to control the motion of the gripper unit by bringing a tip of a capillary and the substrate to a predetermined first distance so that the substance contacts the substrate, (for instance subsequently) bringing the tip and the substrate to a predetermined second distance being larger than the first distance at which second distance the tip and the substrate remain connected by the substance, (for instance subsequently) maintaining the tip and the substrate at the second distance for a predetermined incubation time, (for instance subsequently) moving at least one of the tip and the substrate by the first motion mechanism (i.e. in or parallel to the surface plane of the substrate) relative to the other to dispense the substance along a path defining the stripe, and (for instance subsequently) separating the tip and the substrate so that they are no longer connected by the substance. This procedure may allow to produce stripe-like spots without the danger of ruptures and with homogeneous properties along the extension of the stripe.

A sensor mechanism may be provided for sensing (the event or point of time) when the container abuts against (or contacts) the surface portion of the substrate to thereby dispense the substance to the surface portion of the substrate. The sensor mechanism may comprise an electric sensor sensing the abutment by a disconnection of an electric contact, an optical sensor sensing the abutment by an optical signal of a light barrier being affected by the abutment, and/or a pressure sensor being affected by the abutment, or any other sensor appropriate for this purpose.

A retention time adjustment unit may be provided which is adapted for adjusting a retention time during which the container remains abutting against the surface portion of the substrate after sensing by the sensor mechanism that the container abuts against the surface portion of the substrate. The retention time adjustment unit may be adapted for triggering the second motion mechanism to lift the container after expiry of the adjusted retention time. Thus, a desired retention time interval may be pre-stored in the system. After sensing that the capillary has contacted the surface of the substrate to initiate the dispensing, the system may keep the capillary in contact with the surface for the specified retention time interval. Subsequently, a spotter arm may be raised so that the spotter arm will transport the capillary upwardly, thereby terminating the dispensing procedure. In contrast to lifting the capillary, it is also possible to lower the substrate after expiry of the retention time.

The dispenser device may comprise an impact force adjustment mechanism adapted to adjust an impact force with which the container hits the surface of the substrate. This may prevent the substrate and/or the capillary from being destroyed due to excessive hitting forces. Furthermore, this may allow to accurately set a dispensing characteristic. Particularly, an impact force adjustment mechanism may allow to adjust a distance between the first magnetic element and the second magnetic element (which are designed to repulse each other) to adjust an impact force with which the container hits the surface of the substrate. The impact force adjustment mechanism may be a screw adapted to adjust a distance between the first magnetic element and the second magnetic element by screwing, which has an impact on the magnetic repulsion force generating a counterforce to a gravitational force.

The dispenser device may comprise a drying mechanism adapted for promoting drying of the substance dispensed onto the substrate. Rapidly drying the substance after spotting may be highly advantageous particularly for preventing biological substances from being destroyed or inactivated or the like.

The drying mechanism may comprise a heating element adapted for heating the substance dispensed onto the substrate. By providing thermal energy to the substance, at least a part of the substance (particularly a solvent, which may be an aqueous solution and may, in some embodiments, comprise a contribution of an organic solvent) may be removed partially or entirely by evaporation, thereby forcing the substance to dry in a fast manner.

Additionally or alternatively, the drying mechanism may comprise a ventilation element adapted for providing the substance dispensed onto the substrate with a fluid stream, particularly with a gas stream, more particularly with a gas stream having a small or vanishing relative humidity. The fluid stream may be directed to blow or to stream over the spotted substance so that a part of the substance (particularly a solvent, more particularly an organic solvent) may be removed by the streaming fluid. The fast drying may be further enhanced by preheating the streaming gas. However, a small humidity of the streaming gas may be particularly advantageous.

The ventilation element may comprise a ventilation rack having a plurality of ventilation holes through which the fluid stream leaves the ventilation rack to be guided to the substance dispensed onto the substrate. With such a configuration, an efficient drying of a large number of spots at a time may be effected.

The ventilation element may also comprise a ventilation tube arranged adjacent the capillary (i.e. directly next to the capillary so that the ventilation tube may be moved with the capillary by the first and second motion mechanism), wherein the fluid stream leaves the ventilation tube to be guided to the substance dispensed onto the substrate. This configuration allows to implement a close spatial and functional relationship between the spotting and the drying procedure.

The drying performed by the ventilation element may comprise providing the substance dispensed onto the substrate with a ventilating fluid stream having a humidity of less than 10%. In other words, the fluid stream may have a water contribution of less than 10 vol. % or of less than 10 mass %. It may be advantageous to use a fluid stream being essentially dry, i.e. being free of a water contribution. It is believed that the drying effect may be disturbed by a water contribution in the fluid stream. Thus, it may be appropriate to use a helium stream or a nitrogen stream from a gas bottle, to prevent any moisturization of the dispensed substance by the fluid stream.

For an efficient drying or for an enhancement of the evaporation rate, it may be advantageous to simultaneously heat a substrate and guide a dry gas stream over the dispensed surface of the substrate.

In the following, further embodiments are explained regarding a method by which a solution comprising a substance and a solvent is first deposited and then the solvent is partially or entirely removed from the substance, thereby drying the solution so that the substance concentration is increased or the humidity of the remaining material is reduced.

The substance may comprises biological molecules, particularly proteins, for example HLA antigens. The solvent may comprise an organic solvent (which may be a minor contribution to an essentially aqueous solution forming the major part of the solvent), for instance glycol. The contribution of the organic solvent to the entire solvent may be less than essentially 50%, preferably less than essentially 20%, more preferably less than essentially 10%. A drying time may be in a range between essentially 1 ms and essentially 20 s, particularly in a range between essentially 1 ms and essentially 10 s. A drying rate (i.e. removed volume per time) may be at least 500 nl/s, particularly at least 1 $\mu$l/s.

The method may comprise dispensing the substance onto the substrate for forming a micro array. Particularly, the method may comprise dispensing the substance in wells of the substrate for forming wells comprising a dried substance. Such dried substances may fill the wells partially. During a biochemical analysis, it is possible to provide the dried substances (which may be provided manually by a pipette, or automatically for instance by guiding liquids to channels of a microfluidic chip to enter the wells for re-suspending the dried material).

An individual spot or stripe may be formed by depositing a portion of the solution comprising the substance and the solvent onto the substrate, removing at least a part of the solvent from the substrate by drying the deposited portion of the solution, and performing the depositing and the removing a plurality of times for forming the spot. For instance, a total volume of 20 $\mu$l may be dispensed by four times dispensing 5 $\mu$l, wherein between two subsequent dispensing procedures, the previously applied substance may be at least partially dried. This may accelerate the entire drying procedure.

A total volume of the solution to be applied may be less than essentially 50 $\mu$l, particularly less than essentially 20 $\mu$l.

The aspects defined above and further aspects of the invention are apparent from the examples of embodiment to be described hereinafter and are explained with reference to these examples of embodiment.

BRIEF DESCRIPTION OF THE DRAWINGS

The invention will be described in more detail hereinafter with reference to examples of embodiment but to which the invention is not limited.

Fig. 1 illustrates a dispenser device according to an exemplary embodiment of the invention.
Fig. 2 illustrates a dispenser device according to an exemplary embodiment of the invention.
Fig. 3 illustrates the dispenser device of Fig. 2 and shows a detailed view of a sensor portion for sensing abutment between a capillary and a substrate.
Fig. 4a shows top views of two test zones formed by a dispenser device according to an exemplary embodiment of the invention.
Figs. 4b to 4g illustrate a method for forming the test zone of Fig. 4a.
Fig. 5 to Fig. 7 show images on the basis of which appropriate parameters for generating stripe-shaped spots are derivable.
Fig. 8 and Fig. 9 illustrate diagrams showing time dependencies of position and velocity of a spotting cycle of different members of the dispenser device of Fig. 1.
Fig. 10 and Fig. 11 illustrate dispenser devices according to exemplary embodiments of the invention having a sample drying feature.
Fig. 12A to Fig. 12H illustrate a procedure of removing at least a part of a sample by drying after spotting.

DESCRIPTION OF EMBODIMENTS

The illustration in the drawing is schematically. In different drawings, similar or identical elements are provided with the same reference signs.

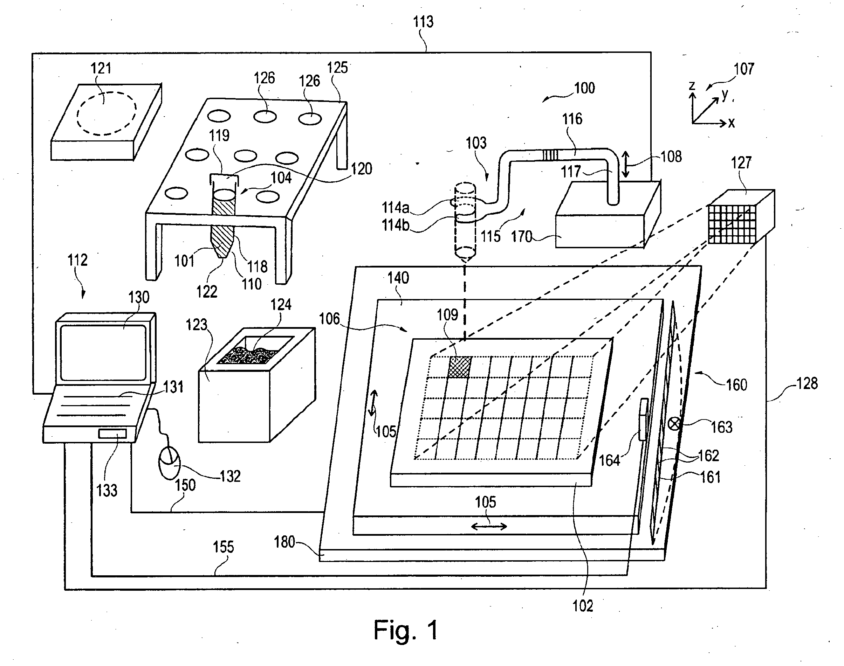

In the following, referring to Fig. 1, a dispenser device 100 according to an exemplary embodiment of the invention will be explained.

The dispenser device 100 is adapted for dispensing a substance 101 onto a substrate 102. The dispenser device 100 comprises a gripper unit 103 adapted for gripping a container 104 including the substance 101.

A first motion mechanism (indicated schematically with reference numeral 105 and comprising a plurality of components, as will be explained in more detail) is provided which is adapted for moving the gripper unit 103 and the substrate 102 relative to each other within a planar region 106 which equals to a main surface of the substrate 102. The planar region 106 is the xy-plane, as indicated by a coordinate system 107. In more detail, the first motion mechanism 105 is adapted to move the substrate 102 within the planar region 106, whereas the gripper unit 103 may be maintained fixed in the xy-plane 106, more precisely may be maintained with fixed x- and y-coordinates. The substrate 102 is mounted on a substrate holder 140 which may be a table or the like and which may be movable relative to a base unit 180. The substrate holder 140 loaded with the substrate 102 onto which the substance 101 is to be applied is movable in the x-direction and in the y-direction. For this purpose, the first motion mechanism 105 comprises a first step motor (not shown, but integrated in the base unit 180) adapted for moving the substrate 102 along the x-direction within the planar region 106 (while the gripper unit 103 is spatially fixed) and comprises a second step motor (not shown, but integrated in the base unit 180) adapted for moving the substrate 102 (while the gripper unit 103 is spatially fixed) along the y-direction within the planar region 106. With the substrate 102 being moved in the xy-plane 106 and the gripper unit 103 being spatially fixed in the xy-plane 106, a relative motion between the gripper unit 103 and the substrate 102 may be enabled, allowing the gripper unit 103 to be positioned exactly above a specific surface portion 109 onto which a (metered) dose of a substance 101 is to be deposited. The first step motor and the second step motor are controllable by a control unit 112 (a laptop or the like) which is communicatively coupled to the first motion mechanism 105 via a cable 150.

For a fine tuning of a relative xy-position between the gripper unit 103 and the substrate 102, a position measurement mechanism 160 is provided. The position measurement mechanism 160 is shown in Fig. 1 only with regard to the y-direction. However, a similar arrangement may also be provided for the x-direction. The position measurement mechanism 160 is communicatively coupled with the control unit 112 via a cable 155 for exchanging instructions and measurement data.

The position measurement mechanism 160 is based on a distance measurement along the y-direction using an optical marker measurement. The position measurement mechanism 160 comprises an optically transparent stripe-like element 161 onto which a plurality of equidistantly spaced opaque markers 162 are printed. By counting a number of markers 162 which are passed by the moving table 140 of the dispensing device 100, a highly precise position information may be obtained which may, in turn, be used for controlling motion within the planar area 106. To detect this number, an optical light source 163 (for instance an LED) and a light detector 164 (for instance a photodiode) are provided, wherein the stripe-like element 161 is spatially fixed and the table 140 moves under control of the corresponding step motor(s). Thus, the elements 161 to 164 cooperate in accordance with a light barrier principle. As an alternative to the markers 162 in the shape of a line, other geometries or detection schemes are possible.

A second motion mechanism 115 is provided for moving the gripper unit 103 and the substrate 102 relative to each other in a direction 108 which is perpendicular to the planar region 106. When such a vertical motion is performed in an operation state in which the container 104 is held by the gripper unit 103, the container 104 held by the gripper unit 103 is lowered to touch or hit the surface portion 109 of the substrate 102, thereby dispensing a dose of the substance 101 to the surface portion 109 of the substrate 102. More particularly, the second motion mechanism 115 is adapted to move the gripper unit 103 (while the substrate 102 is spatially fixed) in the vertical z-direction 108 perpendicular to the horizontal planar region 106.

The first motion mechanism 105 and the second motion mechanism 115 are decoupled from one another. In other words, actuation of the first motion mechanism 105 may be independent of (and may be free of an influence on) an actuation of the second motion mechanism 115, and vice versa. Thus, a position adjustment in the xy-plane 106 is decoupled from a position adjustment along the z-direction 108.

The first motion mechanism 105 is movable exclusively in the xy-plane 106. In contrast to this, the gripper unit 103 is movable relative to the substrate 102 by the second motion mechanism 115 exclusively in the direction 108 which is perpendicular to the planar region 106. In an operation state in which the gripper unit 103 is holding the container 104 and is lowered to abut against the surface portion 109 of the substrate 102, the contact may initiate a deposition of the substance 101 to the surface portion 109 of the substrate 102. When the gripper unit 103 is lowered in the direction 108, the container 104 (more particularly a tip 110 of the container 104) may touch the surface portion 109 of the substrate 102 with an adjustable velocity and/or acceleration and/or force. The motion of the grip unit 103 relative to the substrate 102 in the z-direction 108 and the motion of the grip unit 103 relative to the substrate 102 in the xy-plane 106 may be controlled or coordinated by the control unit 112, namely a laptop connected by a wired connection 113 to the arrangement including the gripper unit 103.

As indicated schematically in Fig. 1, the gripper unit 103 is adapted for gripping a capillary as the container 104. Since the gripper unit 103 comprises two jaws 114a, 114b, which jaws are closable or openable under the control of the control device 112, the gripper device 103 may only grip exactly one capillary 104 at a time.

The gripper unit 103 comprises a rod 117 which may be moved only in a vertical direction 108 (that is to say up or down to be retractable partly in a carrier unit 170). The gripper unit 103 further comprises an arm 116 (like a cantilever arm). Optionally, the arm 116 may be moved in the xy-plane to enable a gripping operation of the gripper unit 103 for gripping the capillary 104. Optionally, a length of the arm 116 can also be varied for the sake of handling the capillary 104, for instance by a telescope mechanism or the like. Thus, only for handling the capillary (as will be described in detail below), the arm 116 and the rod 117 may be moved three-dimensionally. However, for defining an exact relative position between the gripper unit 103 holding the capillary 104 on the one hand and the substrate 102 on the other hand, the gripper unit 103 can only be moved vertically along the direction 108, and the substrate 102 can only be moved in the plane 106.

It is important to mention that the first motion mechanism 105 and the second motion mechanism 115 are operable completely independently from one another, that is to say the motion mechanisms 105, 115 are functionally decoupled from one another completely. This may make it possible to adjust the z-direction 108 independently from the xy-plane 106, allowing to decouple the two position adjusting mechanisms which allows, as a result, an improved accuracy concerning positional adjustment. When operating the device 100 to define a spotting position, the second motion mechanism 115 allows raising or lowering the gripper unit 103 (in an operation state in which the gripper unit 103 carries the container 104) onto the substrate 102 or away from the substrate 102. In contrast to this, a particular one of the plurality of surface portions 109 of the substrate 102 may be selected using the second motion mechanism 115. In other words, a motion by the first motion mechanism 105 prepares or positions the components for a spotting procedure, and a motion by the second motion mechanism 115 executes the previously defined spotting procedure.

As can be taken from Fig. 1, the container 104 is a capillary which has a tapered substance outlet portion 110 through which the substance 101 can be dispensed onto the substrate 102. Furthermore, the capillary 104 has a tubular portion 118 at which the capillary 104 is grippable by the gripper unit 103, more particularly by the jaws 114a, 114b of the gripper unit 103. Beyond this, the capillary 104 comprises a removable cap 119 adapted for closing an opening 120 of the capillary 104 which differs from and faces the tapered substance outlet portion 110, namely is provided at an opposite end portion of the capillary 104. The gripper unit 103 is adapted for removing the cap 119 from the capillary 104 and by putting the removed cap 119 onto a holder device 121.

Promoted by the narrow shape of the opening 122 at the tapered end portion 110 of the capillary 104, when a salt comprising substance 101 (for instance a biological sample dissolved in a buffer) is present at the tip 110, it may happen that the liquid portion of this composition 101 evaporates, so that a solid deposit may remain at the tip 110, more particularly at or close to the narrow opening 122 for outletting the substance 101 from the container 104. In order to remove such a solid deposit from the tapered substance outlet portion 110 at least partly, an activator unit 123 may be provided. The activator unit 123 is adapted for at least partially removing the solid deposit from the tapered substance outlet portion 110 by immersing the tapered substance outlet portion 110 into a cleaning liquid 124. Additionally or alternatively, the activator unit 123 may comprise a vacuum unit for applying a negative pressure to the tapered substance outlet portion 110 before, after or instead of being immersed in the fluid 124 for at least partially removing the solid deposit by applying a sucking force.

Moreover, the dispenser device 100 comprises a rack 125 in which a plurality of receiving sections 126 are formed each adapted for receiving or accommodating a corresponding one of a number of capillaries 104. In the embodiment of Fig. 1, only one capillary 104 is received in one of the receiving sections 126.

Beyond this, a camera 127 is provided which may be a CCD camera, a video camera, etc. and which may be adapted for inspecting the substrate 102 for determining whether the substance 101 has been dispensed successfully to the surface portion 109 of the substrate 102. The dispenser device 100 may be particularly adapted in such a manner that, when the camera 127 has detected that the substance 101 has not been dispensed to the surface portion 109 of the substrate 102 successfully, the gripper unit 103 may be again moved in the direction 108 perpendicular to the planar region 106 to thereby dispense again substance 101 to the surface portion 109 of the substrate 102, thereby repeating the spotting procedure.

The camera 127 may be connected via a wired connection 128 to the control unit 112. The camera 127 may provide the captured image data indicative of the surface 102 characteristic to the control unit 102 which may apply image processing algorithms or other evaluation procedures to process the data in order to derive the information whether the spotting process has been completed successfully for the surface portion 109, or not. If the amount of substance 101 spotted onto the surface portion 109 is determined to be non-sufficient by the control unit 112, the control unit 112 may send, via the connection 113, a corresponding control signal to the movable gripper element 103 so that the gripper unit 103 is lowered again towards the surface portion 109 to supply a defined amount of substance 104 to this portion.

Additionally or alternatively, the dispenser device 100 may be adapted in such a manner that, when the camera 127 has inspected that the substance 104 has not been dispensed to the surface portion 109 of the substrate 102 successfully, the surface portion 109 is categorized accordingly (for instance as "suspicious spot" or as "low quality spot"). In other words, the control unit 112 may store identification information or a quality map in a memory thereof indicative of the surface portions 109 of the substrate 102 which have not been provided with substance 101 in a satisfying manner.

The control unit 112 is a laptop, but may also be a personal computer, a workstation, or even a handheld device, like a PDA (personal digital assistant) or a mobile phone, and is adapted for centrally controlling operation of the gripper unit 103, the first motion mechanism 105, the second motion mechanism 115, the camera 127, and any further peripheral device provided in or connected to the device 100, but not shown in Fig. 1 (for instance a printer).

The control unit 112 comprises a monitor 130, a keypad 131, a computer mouse 132, and a CPU 133 which is also indicated schematically in Fig. 1 and which may provide computational processing resources needed for controlling or regulating the device 100. A computer program may be stored in a memory (not shown in Fig. 1) of the laptop 112, like a harddisk or a memory stick connected to a USB port of the laptop 112. Such a computer program may contain the necessary routines for operating the dispenser device 100.

The computer 112 may also serve as a user interface allowing a human user to define a manner of dispensing the substance 101 onto the substrate 102.

In the following, the operation of the device 100 will be explained in more detail.

For instance, it may be desired, that the surface portion 109 is dispensed with a certain amount of the substance 101 using the dispenser device 100.

In such a scenario, a human user may define parameters of the dispensing process, for instance an amount of substance and a kind of substance(s) to be applied to the surface portion(s) 109, via the computer 112. Then, the gripper unit 103 may be moved towards the rack 125 to remove the cap 119 of the container 104. Afterwards, this cap 119 may be placed temporarily on the holder 121.

After that, the gripper device 103 may grip the container 104 at the tubular portion 118, by correspondingly actuating the jaws 114a, 114b. Optionally, the capillary 104 is dipped into the cleaning fluid 124 of the activator unit 123. Therefore, a solid deposit (like a salt crust) which may be present at the tip 110 of the container 104 may be removed to open the substance outlet opening 122.

After that, the container 104 may be moved towards the substrate 102. Then, the table 140 is moved in the xy-plane 106 relative to the gripper unit 103 holding the capillary 104, thereby positioning the capillary 104 exactly above a selected surface portion 109 of the substrate 102. Then, the rod 117 is selectively lowered under the control of the control unit 112 so that the tip 110 of the container 104 held by the gripper unit 103 abuts against the selected surface portion 109 of the substrate 102. When contacting the surface portion 109 with the tip 110 (or in a contact-free embodiment: at a minimum distance between the surface portion 109 and the tip 110), the final velocity and/or the acceleration of the container 104 may be adjusted to predetermined values, so that a desired amount of the substance 101 is placed onto the portion 109 under the influence of the force resulting from the deceleration and/or abutting.

This process is monitored by the camera 127 which provides result information to the computer 112. The computer 112 calculates whether the amount of substance 101 deposited onto the surface portion 109 is within a predetermined acceptable range, and if this is the case, the spotting process for the surface portion 109 is finished and the spotting of other surface portions of the substrate 102 may be continued. If this is not the case, the procedure may be repeated, and an additional amount of substance 101 is placed on the surface portion 109 in a subsequent spotting procedure.

When all spotting steps with the substance 101 are completed, that is to say for instance when the container 104 is empty, the gripper portion 103 may place the empty container 104 again in a receiving section 126 of the rack 125. After having placed the cap 119 again on the top of the container 104, the procedure is finished.

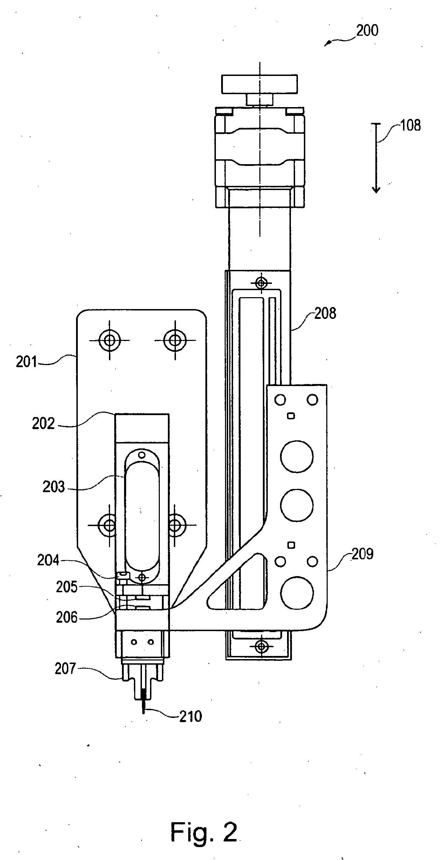

In the following, referring to Fig. 2, a dispenser device 200 according to an exemplary embodiment of the invention will be explained.

The dispenser device 200 of Fig. 2 can be combined with a plurality of the components which are shown only in Fig. 1 but not in Fig. 2, so that in Fig. 2 mainly the aspects related to the motion mechanism in z-direction 108 will be explained.

The dispensing device 200 comprises a mount 201 and a corresponding z-axis drive 208. The z-axis is indicated with reference numeral 108. On a movable part of the z-axis drive 208, a lifting adapter 209 is fastened having a first magnet 206 attached thereto.

On the mount 201, a linear guide element 202 is provided. Via an adapter 203, a gripper unit 207 is mounted (for instance operated pneumatically, electrically and/or hydraulically). The gripper unit 207 can be of different shapes, which are appropriate for gripping the capillaries in a defined manner. For instance, one or both gripper jaws may have a profile or changeable adapter jaws may be provided having a profile (for instance a V-shaped groove, interrupted or uninterrupted). Also a three-point support (for instance realized via spheres) or a four-point support (for instance realized via spheres) is possible. The principle of the gripper 207 ensures that the needle 210 is at a defined position in the gripper 207 during the entire spotting procedure. This may allow achieving a very high positional accuracy of the capillary.

At the adapter 203, a second magnetic element 205 is fastened or attached which generates a repulsive force which contravenes the first magnet 206. Via a screw 204, a minimum distance between the adapter 203 and the elevation adapter 209 may be defined.

When spotting, the elevation adapter 209 is guided below, that is to say along the direction 108, and during this procedure the adapter 203 and the gripper unit 207 are forced to be lowered by a direction determining force (a gravitational force, spring force, magnetic force, or the like). The magnets 5, 6 which generate a repulsive force may receive the forces acting towards the lower portion of Fig. 2, and may hold the gripper unit 207 in a floating stage.

The magnets 205, 206 may act as damping elements, in order to allow the capillary to touch or impact onto a surface of the substrate with a controlled force and/or velocity. The strength of the magnets 205, 206 may allow to adjust the degree of the damping. When the elevation adapter 209 is driven below, the adapter 203 with the gripper element 207 may follow this motion. Subsequently, the elevating adapter 209 is stopped in such a manner over the surface that the repulsive forces acting between the two magnets 205 and 206 break or reduce the speed of the gripper unit 207. The capillary therefore abuts against the surface in a retarding manner and not with the fully weight of the adapter 203, but with a definable velocity and force. This may have the advantage that, when the capillary hits the surface of the substrate, the elevation adapter 209 can drive further below without a further pressure or force acting on the capillary. Therefore, a deterioration of the surface may be securely prevented. An oscillation of the magnets 205, 206 may be prevented by a stopper element (for instance a screw 204). This may be adjusted so that the adapter 203 with the gripper 207 is reduced in velocity, but the repulsive forces between the magnets 205, 206 are not such large that the adapter 203 and the gripper unit 207 are pressed further towards an upper portion of Fig. 2, that is to say are further raised.

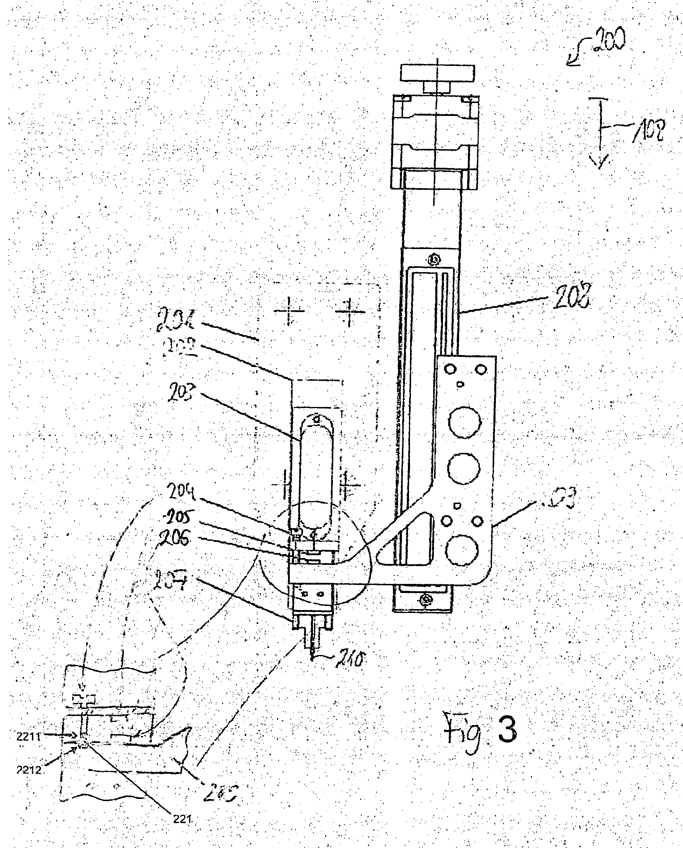

Fig. 3 illustrates the dispenser device 200 shown in Fig. 2 together with further details regarding the coupling properties between the elevation adapter 209 (which may also be denoted as a "spotter arm") and a "spotter head", which is formed by components 203 to 205, 207.

An adjustment of the contact time of the container (or capillary or needle) 210 on the surface of the substrate is possible with the architecture of Fig. 3. As derived experimentally by the present inventors, the period of contacting the surface with the container 210 comprising the substance to be spotted may affect the amount of substance deposited on the surface. Thus, it may be of interest to control the time of contact.

In some embodiments, the device 200 comprises a sensor configured to determine one or more values indicative for a change in the relative speed between container 210 and arm 209. In some embodiments, this sensor (not shown) comprises an electrical contact 221 comprising a contact pad 2211 on screw 204 and another electrical contact pad 2212 on spotter arm 209 thereby allowing an electrical current to flow between both contact pads 2211, 2212. Once the container 210 hits the surface of the spotting substrate, its movement will stop while arm 209 may move further on towards the surface. As a result, contact 221 opens thereby interrupting the electrical current flowing between contact pads 2211 and 2212. The sensor will recognize this interruption and sends a signal to control unit 112 (see Fig. 1) which is configured to, after a freely adjustable delay (of e.g. 0s to Is) after receiving an according signal from control unit 112, stop vertical movement 108 and/or to change the direction of vertical movement 108 of spotter arm 209. Spotter arm 209 will now move upwards, thereby lifting the spotter head 203 to 205, 207 comprising container 210 from the substrate. When spotter arm 209 has reached its starting position the spotter 200 moves to the next spotting position where it will repeat the procedure of:

- lowering arm 209
- stopping container 210 due to contacting the surface,
- thereby opening contact 221,
- changing direction of vertical movement of arm 209,
- raising/lifting arm 209
- thereby lifting container 210 from the surface of the substrate.

In the present embodiment, the sensor functions electrically thereby enabling a current flow in the absence of an abutment of the container 210 against the substrate, and disabling a current flow in the presence of an abutment of the container 210 against the substrate. In other embodiments, the sensor may comprise a light barrier for optically detecting contact of the capillary with the substrate, a pressure sensor or the like.

This set-up also allows compensating differences in high or roughness of the substrate. For this, the arm 209 moves downwards until container 210 hits the surface thereby opening contact 221. As described above, the sensor will recognize this interruption and send a signal to control unit 112 which in some embodiments may be configured to reverse the direction 108 of arm 209 instantly after opening the contact 221. Thus, spotter arm 209 will move upwards thereby moving the spotter head 203 to 205, 207 upwards, too. In some embodiments, the time between opening the contact 221 and moving the spotter head 203 to 205, 207 upwards again is constant for every spot on the substrate. Thus, even if the substrate is rough or has different heights, the container 210 will remain on the surface of the substrate for the same time.

The spotter head 203 to 205, 207 may be decoupled from moving parts such as spotter arm 209 in some operation modes.

In some embodiments, the movement of the spotter head 203 to 205, 207 is completely decoupled from moving parts 209 of the spotter 200 once the container 210 has contacted the surface of the substrate. In these embodiments, the spotter head 203 to 205, 207 is supported by spotter arm 209. This allows a higher spotting accuracy and reduces the danger of destroying the surface of the spotting substrate due to movement of the capillary induced e.g. by vibrations caused be the movement of the spotter arm 209.

Thus, the spotter head 203 to 205, 207 may be decoupled from the spotter arm 209 after touching the surface of the substrate with the tip of the container 210. In the absence of such a contact, the gravitational force (added to or subtracted by a magnetic repulsion force of the magnets 205, 206) promotes that the spotter head 203 to 205, 207 rests on the spotter arm 209. However, the spotter head 203 to 205, 207 is not fixedly mounted on the spotter arm 209. When the container 210 hits the substrate, this prevents the spotter head 203 to 205, 207 from continuing downward motion of the spotter arm 209. In other words, surface contact of the container 210 decouples the spotter head 203 to 205, 207 from the spotter arm 209. As explained above, this decoupling may be sensed, for instance electrically by members 211, 2211, 2212. Based on such a detection event, the retention time of the capillary 210 on the substrate may be controlled or regulated or adjusted. The retention time is the time interval between the point of time at which the container 210 contacts the surface, and the point of time at which the container 210 leaves the surface due to a lifting motion of the spotter arm 209.

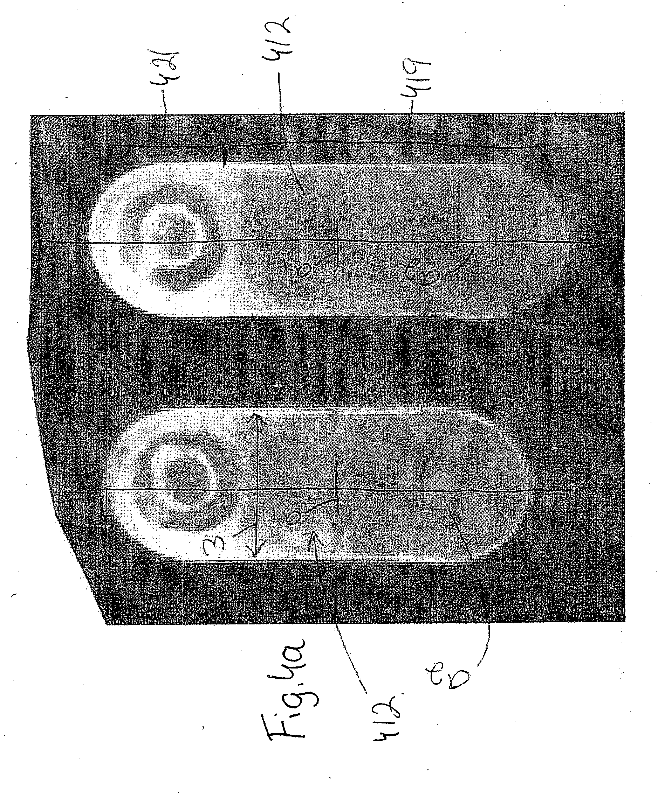

Referring to Fig. 4a, elongate stripe-like test zones 412 are shown having a major axis a2 oriented generally perpendicular to major axis a1 of a channel. Typically, a ratio of a length along major axis a2 to a width w along a perpendicular dimension of the test zones 412 is at least 2.5 (e.g., at least 5). The length along axis a2 is typically at least about 200 $\mu$m (e.g., at least about 350 microns) and typically about 2000 $\mu$m or less (e.g., about 1000 $\mu$m or less, about 750 $\mu$m or less). Width w is typically at least about 25 $\mu$m (e.g., at least about 50 microns) and typically about 500 $\mu$m or less (e.g., about 250 $\mu$m or less, about 150 $\mu$m or less). In an exemplary embodiment, test zones 412 are about 500 $\mu$m long and about 100 $\mu$m wide. The test zones 412 are spaced apart from adjacent test zones by a predetermined distance.

Test zones 412 can be formed as desired. In general, the reagents 101 are contacted with the substrate 102. Then, the reagents 101 and substrate 102 are relatively translated laterally to form an elongated test zone.

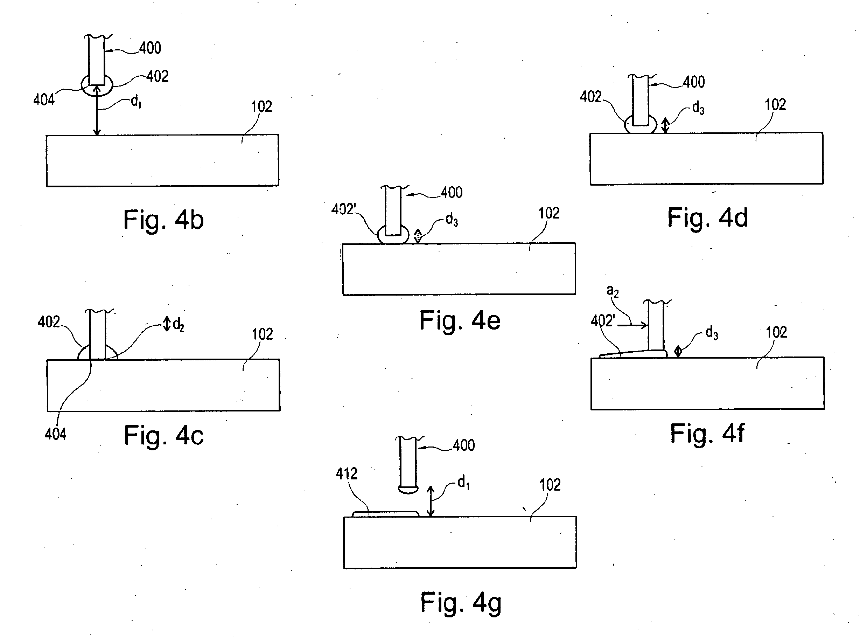

Referring to Figs. 4b-4g, a method for forming test zones 412 includes dispensing reagents 101 from a capillary spotter 100 onto substrate 102. In Fig. 4b, an amount (e.g., between about 2 and 8 nl, between about 3 and 5 nl) of reagent solution 402 containing one or more probe compounds is introduced to a distal tip 404 of a capillary of a capillary spotter. Distal tip 404 typically has a diameter of between about 80 and 120 $\mu$m (e.g., about 100 $\mu$m). Reagent solution 402 and substrate 102 are initially separated (e.g., not in contact) by a distance d1. Typically, d1 is at least about 250 $\mu$m (e.g., about 500 $\mu$m).

In Fig. 4c, tip 404 and substrate 102 are brought to a smaller separation d2 so that reagent solution 402 contacts a location of substrate 102. At the smaller separation d2, distal tip 404 is adjacent the location of substrate 102 (e.g., touching so that d2 is zero). Distal tip 404 and substrate 102 are maintained for a time (e.g., about 1 second or less, about 0.5 seconds or less, about 0.25 second or less) at separation d2 in the adjacent (e.g., touching) position. In some embodiments, the time for which distal tip 402 is maintained in the adjacent (e.g., touching) position is indistinguishable from zero.

In Fig. 4d, distal tip 404 and substrate 102 are moved to an intermediate separation d3 in which distal tip 404 and substrate remain connected by reagent solution 402 of distal tip 404. Typically, intermediate separation d3 is at least about 5 $\mu$m (e.g., at least about 10 $\mu$m) and about 30 $\mu$m or less, about 25 $\mu$m or less). In an examplary embodiment, intermediate separation d3 is about 20 $\mu$m.

In Fig. 4e, distal tip 404 and substrate 102 are maintained at intermediate separation d3 for an incubation time so that at least some (e.g., at least about 10%, at least about 25%, at least about 40%) of reagent solution 402 at the distal tip evaporates so that only a remaining portion 402' of reagent solution 402 remains. Typically, only about 75% or less (e.g., about 50% or less) of reagent solution 402 evaporates to leave solution 402' remaining. The incubation time depends on the nature of the solution 402 (e.g., the probe compound concentration and the solvent vapor pressure) and distal tip 404 environment (e.g., the relative humidity and temperature). Typical incubation times are longer (e.g., at least 5 times as long, at least 10 times as long, at least 20 times as long, at least about 35 times as long) than the period of time for which the tip and substrate are in the adjacent position d2. Exemplary incubation times are least about 5 seconds (e.g., at least about 10 seconds at least about 20 seconds, at least about 25 seconds).

In Fig. 4f, after the incubation time at intermediate separation d3, at least one of the distal tip 404 and substrate 102 are moved laterally relative to the other to dispense reagent solution 402' along a major axis a2. In Fig. 4g, at the completion of the lateral movement, distal tip 402 and substrate 102 are separated so that they are no longer connected by the reagent solution. For example, distal tip 404 and substrate 102 can be returned to initial separation d1. The method can be repeated (e.g., using different reagent solution) to dispense elongate test zones at each of multiple locations of the substrate.

In general, the vertical separation of the distal tip and substrate is changed by moving the distal tip relative to the substrate. In general, the lateral translation of the distal tip and'substrate is performed by translating the substrate relative to the distal tip.

As seen in Fig. 4a, the method for producing elongate test zones 412 provides a more homogenous distribution of probe compounds than a dispensing method that omits the step of lateral moving the distal tip and substrate. Test zones 412 include a first portion 419 and a second portion 421. The distribution of probe compounds in the first portion 419 is more homogenous than in second portion 421 or in test zones, which were prepared without the step of lateral movement.

For manufacturing stripe-shaped spots, it may be advantageous to

- provide a continuous supply of fluid (by a capillary)
- provide a sufficiently slow (for instance < 0.4 mm/s) and continuous motion in xy direction
- provide a precise motion in z direction, having a resolution of at least 10 $\mu$m

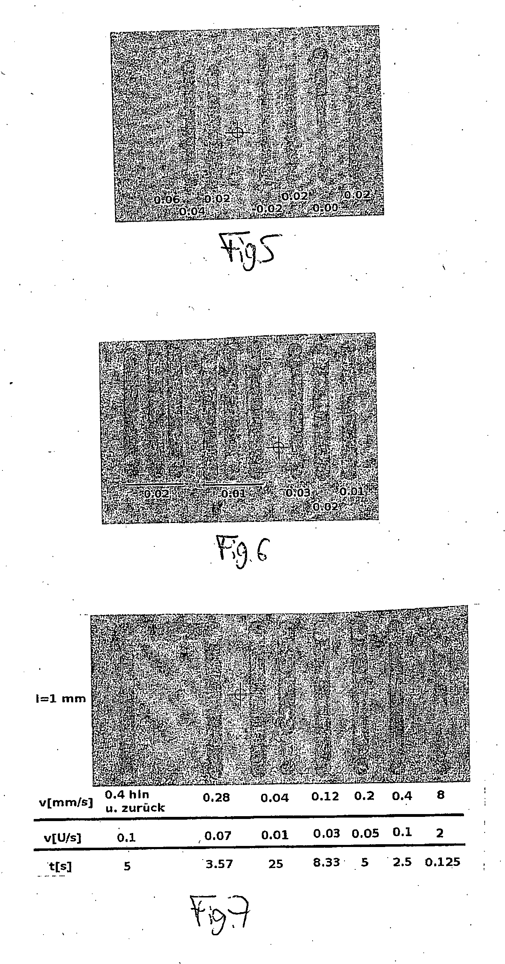

Fig. 5 and Fig. 6 illustrate a sequence of manufacturing stripe-shaped spots.

Firstly, the filled capillary may be moved in 10 $\mu$m wide steps (z-axis) in direction of the surface (for instance glass, plastic) to be provided with the spots. This is done until a contact with the surface is detected, for instance optically (for example using a camera installed at the spotter). This contact may result in a wetting of the surface by the substance.

Secondly, the capillary may be lifted by 20 $\mu$m, so that the actual distance is between 10 $\mu$m and 20 $\mu$m. This distance may be chosen due to the following considerations.

Fig. 5 and Fig. 6 shows stripes having a length of 1 mm at various distances (indicated in Fig. 5 and Fig. 6) between capillary and slide. Fig. 5 corresponds to a step width of 0.02 $\mu$m, and Fig. 6 corresponds to a step width of 0.01 $\mu$m.

As can be taken from Fig. 5 and Fig. 6, for generation of a homogeneous stripe a distance should be maintained. This distance may be less than 60 $\mu$m, wherein already between 40 $\mu$m, 30 $\mu$m, and 20 $\mu$m, significant differences between the stripe diameters can be obtained. However, no significant differences were observed between distances of 10 $\mu$m and 20 $\mu$m. Summarizing, a distance between 10 $\mu$m and 30 $\mu$m, preferably between 10 $\mu$m and 20 $\mu$m, may be advantageous.

The capillary may be moved for generation of the stripes in x and/or y direction with a velocity of 0.2 mm/s. This velocity may be chosen in view of the following considerations.

Fig. 6 illustrates stripes having a length of 1 mm at different velocities. A step width in Fig. 6 is 0.01 $\mu$m, whereas a distance is 0.02 $\mu$m.

As can be taken from Fig. 6, the stripes tend to rupture at very high velocities. Furthermore, a different structure of the stripes can be seen at velocities <0.1 U/s as compared to a velocity of 0.1 U/s. Without wishing to be bound to a specific theory, it is presently believed that structures <0.1 U/s produce better fluorescence signals due to a longer reaction time. Summarizing, a velocity in a range between 0.15 mm/s and 0.25 mm/s, preferably of approximately 0.2 mm/s, may be advantageous.

In order to finish manufacture of the stripes, the capillary may be lifted by at least 30 $\mu$m to 40 $\mu$m, in order to stop the liquid supply.

According to an exemplary embodiment, the xy motion of the dispenser may be decoupled from a z motion. This feature may significantly support the manufacturability of stripes, as described above referring to Fig. 4a to Fig. 7.

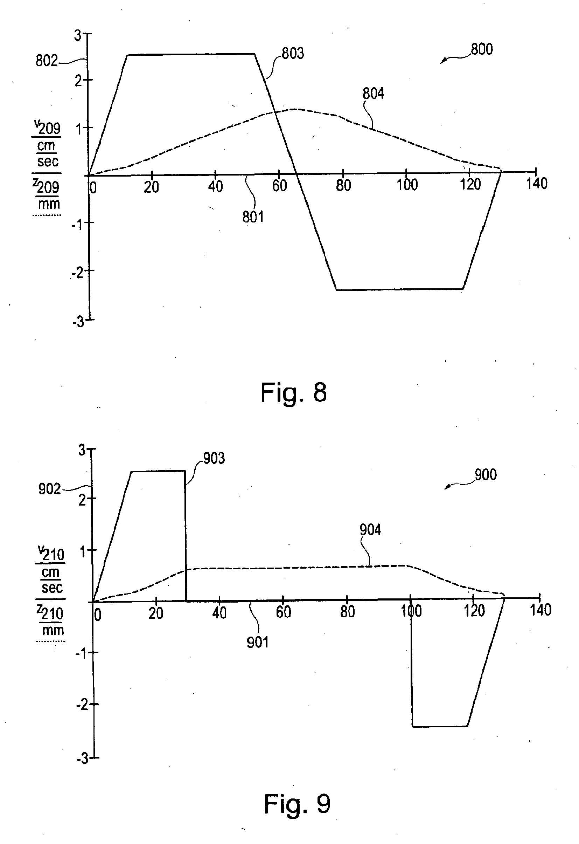

Next, referring to Fig. 8 and Fig. 9, a method of adjusting the container (or capillary or needle) impact force will be provided.

Fig. 8 shows a diagram 800 having an abscissa 801 along which a time is plotted in ms. Along an ordinate 802, a time dependence of the velocity of the spotter arm 209 is plotted as a curve 803, and a time dependence of the vertical position of the spotter arm 209 is plotted as a curve 804.

Fig. 9 shows a diagram 900 having an abscissa 901 along which a time is plotted in ms. Along an ordinate 902, a time dependence of the velocity of the container 210 (or of the capillary or needle) is plotted as a curve 903, and a time dependence of the vertical position of the container 210 is plotted as a curve 904.

As can be taken from Fig. 9, at a point of time of about 30 ms, the motion of the container 210 suddenly stops since the container 210 abuts against the surface of the substrate. Consequently, the velocity 903 is reduced from an initial value to zero. As can be taken from Fig. 8, at the point of time of about 30 ms, the motion of the spotter arm 209 continues when the container 210 abuts against the surface of the substrate. Consequently, the velocity 803 remains above zero at 30 ms.

When the sensor 221, 2211, 2212 detects abutment of the container 210 against the surface of the substrate, the system waits for a predetermined time of about 70 ms. After expiry of this time interval, i.e. at a point of time of about 100 ms, the spotter arm 209 which has meanwhile changed its motion direction from downwards to upwards carries the needle 210 along and forces the container 210 to follow the upward motion, resulting in a sharp fall of curve 903 at 100 ms.

The force $F_{total}$ effective at the point of time when the needle hits the surface of the substrate comprises two different components: a static force $F_{stat}$ and a dynamical force $F_{dyn}$.

$$F_{total} = F_{dyn} + F_{stat}$$

$$F_{dyn} = m_{head} * a_{impact}$$

$$F_{stat} = m_{head} * g$$

wherein $m_{head}$ is the mass of the spotter head (components 203 to 205, 207 in Fig. 3), g is the acceleration of gravity, and $a_{impact}$ is the impact acceleration of the spotter head hitting the surface of the substrate.

Provided that screw 204 contacts arm 209 thus defining the distance between magnets 205 and 206, the repulsion force of the magnet $F_{mag}$ compensates $F_{stat}$ at least partially. The larger the distance between magnets 205 and 206 is, the lower is the repulsion force $F_{mag}$ of the magnets and the less $F_{stat}$ is compensated.

Thus:

$$F_{total} = F_{dyn} + F_{stat} - F_{mag}$$

In the following, some exemplary parameters will be given:

| | |
|---|---|
| distance to move 210 to hit the surface: | $z_{impact}$ = 0.6 mm |
| time required 210 → substrate: | $t_{impact}$ = 30.3 msec |
| Acceleration of 209 | $a_{209}$ = 2 m/sec$^2$ |
| Max velocity of 209 | $V_{209}$ = 25 mm/sec |
| Substrate deformation at impact 210 - substrate (deceleration distance): | $z_{deformation}$ = 10 μm |
| Mass of spotter head: | $m_{head}$ = 40 g |
| Deceleration of 210 during 210 - substrate impact: | $a_{impact}$ = 14 m/sec$^2$ |
| Force caused by decelerating 210 during impact: | $F_{dyn}$ = 0.55 N |
| Force caused by mass of spotterhead without magnetic compensation | $F_{stat}$ = 0.4 N |
| Total Force operating on substrate during impact 210 - substrate | $F_{total\_calc}$ = 0.95 N |
| Total Force operating on substrate during impact 210 - substrate | $F_{total\ measured}$ = 1 N |
| Impact area of container 210 | $A_{capillary}$ = 0.008mm$^2$ |
| Total pressure generated on the substrate due to impact 210-substrate: | $p_{impact}$ = 690 · 10$^5$ Pa |
| Reduced force by 90% magnetic compensation (increased interaction between 205-206 due to decreased distance between magnets adjusted with screw 204) of the weight of the spotter head: | $F_{total\ reduced}$ = 0.59 N |

Thus, by adjusting the distance between magnets 205 and 206 using screw 204 it is possible to manipulate the force effective when the container 210 hits the surface of the spotting substrate. Thus, the distance between the magnets 205 and 206 may be set by using screw 204 so that the magnetic repulsion force either partially or entirely compensates the gravitational force.

Adjusting the force with which the container hits the surface of the substrate may allow to prevent the surface of the substrate from being damaged by the hitting force. Simultaneously, damages of the container (for instance needle/capillary) may be securely prevented by taking this measure. Moreover, the spotting characteristic may be adjusted by adjusting the container impact force.

It has been recognized by the present inventors that the impact force may influence the amount of the spotted substance. Under certain circumstances, increasing the impact force may decrease the amount of deposited substance. Under other circumstances, increasing the hitting force may increase the amount of deposited substance. For example, spotting proteins may involve detergent comprising spotting solutions which may flow out of the capillary rapidly upon a contact with the substrate surface. Increasing the hitting force may suppress this effect. In contrast to this, spotting nucleic acids may be performed free of detergent. Consequently, spotting solutions may leave the container slower upon a contact with the substrate surface. Decreasing the hitting force may increase the amount of the deposited substance.

According to an exemplary embodiment, spots may be dried immediately after spotting.

The present inventors have recognized that especially for spotting peptides or proteins the time for drying up the substances spotted to the surface plays an important role for maintaining the biological activity and/or the biologic active structure of the spotted substance. For example, HLA antigens may be substances included in a sample to be spotted. These proteins may be destroyed or deactivated when they are not dried sufficiently fast. For other biological substances, it may be expected that similar requirements for sufficiently fast drying after dispensing may have to be considered to maintain biological activity of such biological substances.

Thus, a mechanism for forcing dry air (<10% relative humidity) over the spotting substrate of the capillary spotter may be provided. In some embodiments, the air is heated to e.g. 37°C to enhance the drying effect. In some embodiments, the spotting substrate is heated to e.g. to 37°C. Of course, a combination of both measures (ventilation and heating) is possible, too.

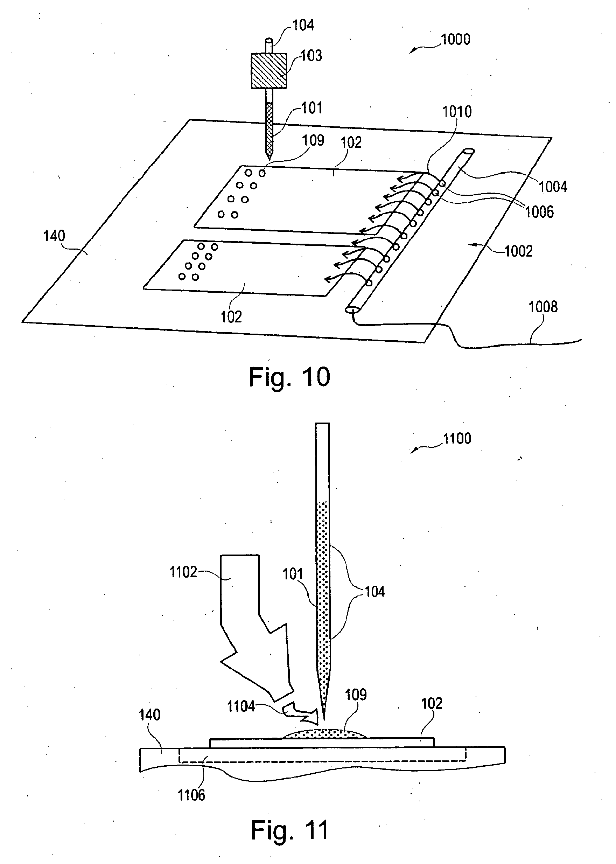

Fig. 10 illustrates a dispenser device 1000 according to an exemplary embodiment of the invention having a sample drying feature.

In the embodiment of Fig. 10, a ventilation mechanism 1002 is provided which comprises a distribution rack 1004 comprising openings 1006. The distribution rack 1002 may be connected to a fluid source (not shown) or a compressor or the like via a fluid connection 1008. The distribution rack 1002 is arranged with respect to substrate holder 140 and one or more substrates 102 in such a way that a fluid stream 1010 leaking through openings 1006 will flow over substrates 102 thereby drying the spots 109 spotted by container 104 mounted to gripper 103 and comprising the substance to be spotted 101.

As can be taken from Fig 10, the substrates 102 rest on the support 140 in which a heating element (not shown) may optionally be integrated for promoting drying of the spot 109 by evaporation. Such a heating element may be provided additionally or alternatively to the ventilation mechanism 1002.

Fig. 11 illustrates a dispenser device 1100 according to an exemplary embodiment of the invention having a sample drying feature.

In the embodiment of Fig. 11, the ventilation comprises a pipe or a nozzle 1102 connected to a fluid source, a compressor or the like (not shown). The pipe or nozzle 1102 is arranged with respect the spotting substrate 102 and/or to one or more substance spots 109 deposited on substrate 102 by container 104 comprising substance 101. When a fluid 1104 leaks the pipe or nozzle 1102, it will flow over the one or more spots 109 thereby drying the spots 109.

By adjusting the relative humidity (e.g. <10%), the temperature (e.g. 20...37°C) and/ or the flow rate of the fluid, the speed of drying the spots may be manipulated. In experiments it has turned out as advantageous that the drying speed is at least 500nl/s.

As can be taken from Fig 11, the substrate 102 rests on the support 140 in which a heating element 1106 may optionally be integrated for promoting drying of the spot 109 by evaporation. Such a heating element 1106 may be provided additionally or alternatively to the ventilation mechanism 1102.

Such a drying procedure may be advantageously applied to a scenario in which biological substances are first deposited on a substrate using a capillary spotter. Directly after depositing, the drying procedure may be carried out. This may allow manufacturing micro arrays having spots or stripes of biological substances. For example, buffer materials may be dispensed in wells or chambers of a microfluidic chip in dried form. Before or during use of such an assay, the dried buffer may be brought in solution by interaction with a liquid.

According to an exemplary embodiment, the solution to be spotted may have an organic solvent component of for instance less than 20%. Directly after depositing/spotting a mixture of a substance (such as a biological substance) and a solvent (such as a solvent which has an organic solvent component of for instance less than 20%), at least a part of the solvent may be removed, for example by a drying procedure. Without wishing to be bound to a specific theory, it is presently believed that rapidly drying a spotted solution may promote a transfer of the dissolved biological molecules into an amorphous phase rather than in a crystalline phase. It is expected that re-suspending such a dried amorphous biological structure may be-easier than re-suspending a dried (partially) crystalline biological structure.

To promote fast drying, it is also possible to deposit a volume the substance in a sequence of steps each comprising depositing a first sub-portion of the volume on the substrate, drying the first sub-portion, depositing a second sub-portion of the volume on the substrate, drying the second sub-portion, and so on. For instance, a volume of 20 $\mu$l may be deposited in four steps each comprising depositing 5 $\mu$l, wherein a drying procedure is performed between subsequent depositing steps.

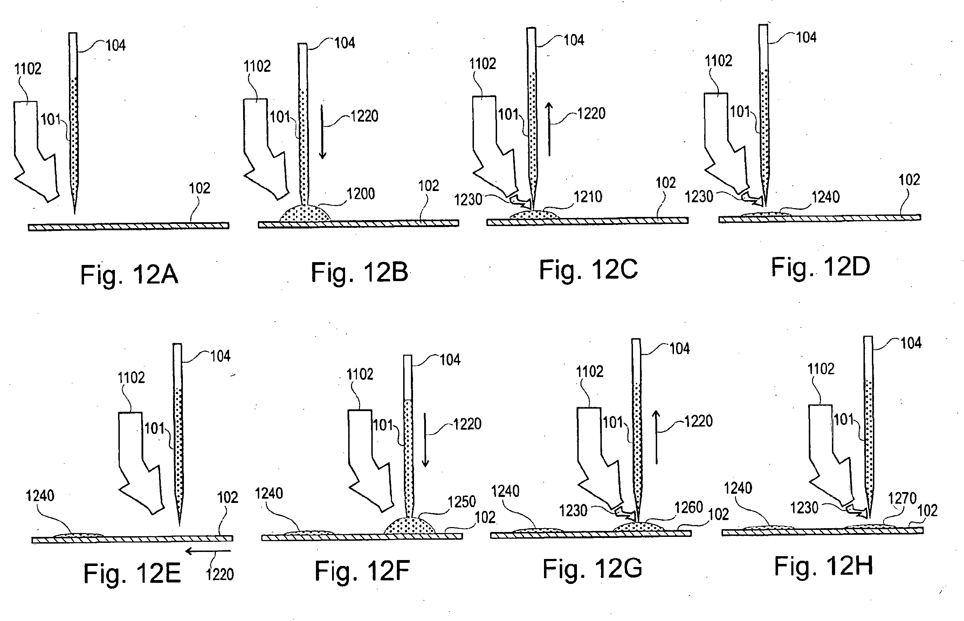

Fig. 12A to Fig. 12H illustrate a procedure of removing sample material by drying after spotting. An exemplary description of spotting of two spots is given,

Fig. 12A to Fig. 12H show an exemplary embodiment for removing at least a part of a solvent of a solution that was deposited on the surface of a substrate. Here, removing at least of a part of the solvent is realised by flowing air over the deposited substance thereby enhancing the rate of evaporation of the substance. In other embodiments, removing at least a part of the solvent may be realized by other methods, e.g. by heating the support for the substrate or the substrate itself.

Starting with Fig. 12A, at the beginning of each spotting cycle, spotting substrate 102 is positioned with respect to dispenser or container 104 to address the location where solution 101 comprising a substance to be spotted and a solvent is to be deposited. Nozzle 1102 is arranged with respect to the substrate 102 and the dispenser 104, so that a gas leaving nozzle 1102 will flow over the location where solution 101 is to be deposited.

In Fig. 12B, dispenser 104 is moved downwards into direction 1220 until it contacts the surface of substrate 102. In some embodiments, dispenser 104 is moved into direction 1220 for at least 0.2mm to 1mm, e.g. for at least 0,6mm with a velocity of 5 to 100mm/s, e.g. 25mm/s. Thus, solution 101 will be deposited on substrate 101 forming a drop 1200 of solution 101 comprising the substance to be deposited and a solvent. In some embodiments, drop 1200 may have a volume of about 50pl to 20µl, e.g. 200pl.

Dispenser 104 is now lifted from the surface into direction 1220 (Fig. 12C). In some embodiments, dispenser 104 is lifted into direction 1220 for at least 0.2mm to 1mm, e.g. for at least 0,6mm. Gas 1230 leaves nozzle 1102 flowing over the solution deposited on substrate 102. In some embodiments, gas 1230 is air with a relative humidity <15%, e.g. <10% or <5%. In other embodiments, gas 1230 is nitrogen or helium. In further embodiments, gas 1230 may be heated to a temperature, e.g. to 37°C. Thus, the rate of evaporation of solvent 101 from drop 1210 is enhanced thereby removing at least a part of the solvent of solution 101. The removal of solvent can be continued e.g. until the solvent is removed completely or e.g. by 90% of its original volume leaving a dried spot 1240 on substrate 1 (Fig. 12D).

In some embodiments, this process may take a time of about 1 ms to 20s, e.g. 50ms or less, 100ms or less, 1s or less or 5s or less. In some embodiments, a gas 1230 will constantly leave nozzle 1102 flowing over the whole surface comprising the locations where the solution 101 has to be deposited (see similar embodiment of Fig. 10). In other embodiments, the gas 1230 will leave nozzle 1102 only directly after depositing the solution 101 for a time of about 10ms to 20s.

Referring to Fig. 12E, the substrate 102 will be positioned into direction 1220 to address the next location where the solution 101 has to be deposited. In some embodiments, the dispenser 104 may dispense the solution 101 multiple times, e.g. 3 times or 5 times to the same location, thereby increasing the amount of substance delivered to the surface or thereby influencing other properties of the substance spot, e.g. the homogeneity of the disposition of the substance. In some embodiments, dispenser 104 and substrate 102 are moved relatively to each other or dispenser 104 is moved relative to substrate 102.

After reaching the location where the substance is to be deposited, the dispenser 104 is moved again to substrate 102 until it contacts the surface of substrate 102. Thus, solution 101 will be deposited on substrate 102 forming a drop 1250 of solution 101 comprising the substance to be deposited and a solvent, see Fig. 12F.

Dispenser 104 is now lifted from the surface into direction 1220 (Fig. 12G). Gas 1230 leaves nozzle 1102 flowing over the solution 101 deposited on substrate 102 thereby removing at least a part of solvent of the solution 101 reducing the volume of spot 1260.

The removal of solvent can be continued e.g. until the solvent is removed completely or e.g. by 90% of its original volume leaving a dried spot 1270 on substrate 102, see Fig. 12H. If required, the process can be continued until the substance is deposited to all desired locations.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A dispenser device (100) for dispensing a substance (101) onto a substrate (102), the dispenser device (100) comprising
   a first motion mechanism (105) configured for moving a container (104) including the substance (101) and the substrate (102) relative to each other within a planar region (106);
   a second motion mechanism (115, 201 to 209) configured for moving the container (104) including the substance (101) and the substrate (102) relative to each other in a direction (108) essentially perpendicular to the planar region (106) to thereby dispense the substance (101) to a surface portion (109) of the substrate (102);
   wherein the first motion mechanism (105) and the second motion mechanism (115, 201 to 209) are decoupled from one another such that a position adjustment in the planar region (106) is decoupled from a position adjustment in the direction (108) essentially perpendicular to the planar region (106),
   wherein the dispenser device (100) further comprises a gripper unit (103, 207) configured for holding the container (104) including the substance (101), **characterized in that**
   the second motion mechanism (201 to 209) comprises a drive unit (208) and an adapter (209), the drive unit (208) being configured for mechanically driving the adapter (209) which is coupled to the gripper unit (103, 207),
   wherein the second motion mechanism (201 to 209) comprises a first magnetic element (206) coupled to the adapter (209) and a second magnetic element (205) coupled to the gripper unit (103, 207), the first magnetic element (206) and the second magnetic element (205) being configured to generate a repulsive force between the adapter (209) and the gripper unit (103, 207) which repulsive force tends to move the gripper unit away from the substrate.

2. The dispenser device (200) of claim 1,
   wherein the first magnetic element (206) and the second magnetic element (205) are configured to generate the repulsive force in the direction (108) which is essentially opposite to a direction of a gravitational force acting on the gripper unit (207).

3. The dispenser device (100) of claim 1 or 2,
   comprising a detection unit (127), particularly a camera (127), configured for inspecting the substrate (102) for determining whether the substance (102) has been dispensed to the surface portion (109) of the substrate (102) successfully.

4. The dispenser device (200) of any one of claims 1 to 3,
   comprising a sensor mechanism (221, 2211, 2212) configured for sensing when the container (210) abuts against the surface portion of the substrate to dispense the substance to the surface portion of the substrate.

5. The dispenser device (200) of claim 4,
   wherein the sensor mechanism comprises one of the group consisting of an electric sensor (221, 2211, 2212) sensing the abutment by a disconnection of an electric contact, an optical sensor sensing the abutment by an optical signal of a light barrier being affected by the abutment, and a pressure sensor being affected by the abutment.

6. A method of using a dispenser device according to any one of claims 1 to 5 for the manufacture of a microarray.

7. Method according to claim 6, the method comprising the steps of;
   moving the container (104) including the substance (101) and the substrate (102) relative to each other within the planar region (106) by the first motion mechanism (105);
   moving the container (104) including the substance (101) and the substrate (102) relative to each other in the direction (108) essentially perpendicular to the planar region (106) by the second motion mechanism (115, 201 to 209) thereby dispensing the substance (101) to the surface portion (109) of the substrate (102);
   holding the container (104) including the substance (101) by the gripper unit (103, 207),
   mechanically driving the adapter (209), which is coupled to the gripper unit (103, 207), by the drive unit (208)
   generating a repulsive force between the adapter (209) and the gripper unit (103, 207) by the first magnetic element (206) coupled to the adapter (209) and by the second magnetic element (205) coupled to the gripper unit, which repulsive force tends to move the gripper unit away from the substrate.

**Patentansprüche**

1. Abgabevorrichtung (100) zur Abgabe einer Substanz (101) auf ein Substrat (102), wobei die Abgabevorrichtung (100) umfasst:

   einen ersten Bewegungsmechanismus (105), der konfiguriert ist, einen Behälter (104) einschließlich der Substanz (101) und das Substrat (102) relativ zueinander innerhalb einer planaren Region (106) zu bewegen;
   einen zweiten Bewegungsmechanismus (115, 201 bis 209), der konfiguriert ist, den Behälter (104) einschließlich der Substanz (101) und das Substrat (102) relativ zueinander in einer Richtung (108), die im Wesentlich senkrecht zu der planaren Region (106) ist, zu bewegen, um dadurch die Substanz (101) auf einen Abschnitt der Oberfläche (109) des Substrats (102) abzugeben;
   wobei der erste Bewegungsmechanismus (105) und der zweite Bewegungsmechanismus (115, 201 bis 209) voneinander entkoppelt sind, so dass eine Anpassung der Position in der planaren Region (106) von einer Anpassung der Position in der Richtung (108), die im Wesentlichen senkrecht zu der planaren Region (106) ist, entkoppelt ist,
   wobei die Abgabevorrichtung (100) ferner eine Greifereinheit (103, 207) umfasst, die konfiguriert ist, den Behälter (104) einschließlich der Substanz (101) zu halten, dadurch charakterisiert, dass
   der zweite Bewegungsmechanismus (201 bis 209) eine Antriebseinheit (208) und einen Adapter (209) umfasst,
   wobei die Antriebseinheit (208) konfiguriert ist, den Adapter (209), welcher an die Greifereinheit (103, 207) gekoppelt ist, mechanisch anzutreiben,
   wobei der zweite Bewegungsmechanismus (201 bis 209) ein erstes magnetisches Element (206), welches an den Adapter (209) gekoppelt ist, und ein zweites magnetisches Element (205), welches an die Greifereinheit (103, 207) gekoppelt ist, umfasst, wobei das erste magnetische Element (206) und das zweite magnetische Element (205) konfiguriert sind, eine Abstoßungskraft zwischen dem Adapter (209) und der Greifereinheit (103, 207) zu erzeugen, wobei die Abstoßungskraft gerichtet ist, die Greifereinheit von dem Substrat wegzubewegen.

2. Abgabevorrichtung (200) gemäß Anspruch 1,
wobei das erste magnetische Element (206) und das zweite magnetische Element (205) so konfiguriert sind, die Abstoßungskraft in die Richtung (108), welche im Wesentlichen entgegengesetzt ist zu einer Richtung einer Gravitationskraft, die auf die Greifereinheit (207) wirkt, zu erzeugen.

3. Abgabevorrichtung (100) gemäß Anspruch 1 oder 2,
umfassend eine Detektionseinheit (127), insbesondere eine Kamera (127), die konfiguriert ist, das Substrat (102) zu untersuchen, um zu bestimmen, ob die Substanz (102) erfolgreich auf den Oberflächenabschnitt (109) des Substrats (102) abgegeben worden ist.

4. Abgabevorrichtung (200) gemäß einem der Ansprüche 1 bis 3,
umfassend einen Sensormechanismus (221, 2211, 2212), der konfiguriert ist festzustellen, wann der Behälter (210) an den Abschnitt der Oberfläche des Substrats anstößt, um die Substanz auf den Abschnitt der Oberfläche des Substrats abzugeben.

5. Abgabevorrichtung (200) gemäß Anspruch 4,
wobei der Sensormechanismus einen aus der Gruppe bestehend aus einem elektrischen Sensor (221, 2211, 2212), der das Anstoßen durch eine Trennung eines elektrischen Kontakts bemerkt, einem optischen Sensor, der das Anstoßen durch ein optisches Signal einer Lichtbarriere, die bei dem Anstoßen beeinflusst wird, bemerkt, und einem Drucksensor, der durch das Anstoßen beeinflusst wird, umfasst.

6. Verfahren zur Verwendung einer Abgabevorrichtung gemäß einem der Ansprüche 1 bis 5 für die Herstellung eines Mikroarrays.

7. Verfahren gemäß Anspruch 6, wobei das Verfahren die Schritte umfasst:

Bewegen des Behälters (104) beinhaltend die Substanz (101) und das Substrat (102) relativ zueinander innerhalb der planaren Region (106) durch den ersten Bewegungsmechanismus (105);
Bewegen des Behälters (104) beinhaltend die Substanz (101) und das Substrat (102) relativ zueinander in die Richtung (108), die im Wesentlichen senkrecht zu der planaren Region (106) ist, durch den zweiten Bewegungsmechanismus (115, 201 bis 209), wodurch die Substanz (101) auf den Abschnitt der Oberfläche (109) des Substrats (102) abgegeben wird;
Halten des Behälters (104) beinhaltend die Substanz (101) durch die Greifereinheit (103, 207),
mechanisches Bewegen des Adapters (209), welcher an die Greifereinheit (103, 207) gekoppelt ist, durch die Antriebseinheit (208),
Generieren einer Abstoßungskraft zwischen dem Adapter (209) und der Greifereinheit (103, 207) durch das erste magnetische Element (206), welches an den Adapter (209) gekoppelt ist, und durch das zweite magnetische Element (205), welches an die Greifereinheit gekoppelt ist, wobei die Abstoßungskraft gerichtet ist, die Greifereinheit von dem Substrat wegzubewegen.

**Revendications**

1. Dispositif distributeur (100) destiné à distribuer une substance (101) sur un substrat (102), le dispositif distributeur (100) comprenant
un premier mécanisme de déplacement (105) configuré pour déplacer un contenant (104) incluant la substance (101) et le substrat (102) l'un par rapport à l'autre au sein d'une région planaire (106) ;
un deuxième mécanisme de déplacement (115, 201 à 209) configuré pour déplacer le contenant (104) incluant la substance (101) et le substrat (102) l'un par rapport à l'autre dans une direction (108) sensiblement perpendiculaire à la région planaire (106) pour distribuer ainsi la substance (101) sur une partie de surface (109) du substrat (102) ;
sachant que le premier mécanisme de déplacement (105) et le deuxième mécanisme de déplacement (115, 201 à 209) sont découplés l'un de l'autre de telle sorte qu'un réglage de position dans la région planaire (106) soit découplé d'un réglage de position dans la direction (108) sensiblement perpendiculaire à la région planaire (106),
sachant que le dispositif distributeur (100) comprend en outre une unité de préhension (103, 207) configurée pour maintenir le contenant (104) incluant la substance (101), **caractérisé en ce que**

le deuxième mécanisme de déplacement (201 à 209) comprend une unité d'entraînement (208) et un adaptateur (209), l'unité d'entraînement (208) étant configurée pour entraîner mécaniquement l'adaptateur (209), lequel est couplé à l'unité de préhension (103, 207),

sachant que le deuxième mécanisme de déplacement (201 à 209) comprend un premier élément magnétique (206) couplé à l'adaptateur (209) et un deuxième élément magnétique (205) couplé à l'unité de préhension (103, 207), le premier élément magnétique (206) et le deuxième élément magnétique (205) étant configurés pour générer une force de répulsion entre l'adaptateur (209) et l'unité de préhension (103, 207), laquelle force de répulsion tend à déplacer l'unité de préhension en l'éloignant du substrat.

2. Le dispositif distributeur (200) de la revendication 1,
dans lequel le premier élément magnétique (206) et le deuxième élément magnétique (205) sont configurés pour générer la force de répulsion dans la direction (108) qui est sensiblement opposée à une direction d'une force gravitationnelle agissant sur l'unité de préhension (207).

3. Le dispositif distributeur (100) de la revendication 1 ou 2,
comprenant une unité de détection (127), en particulier une caméra (127), configurée pour inspecter le substrat (102) afin de déterminer si la substance (102) a été correctement distribuée sur la partie de surface (109) du substrat (102).

4. Le dispositif distributeur (200) de l'une quelconque des revendications 1 à 3, comprenant un mécanisme de capteur (221, 2211, 2212) configuré pour capter si le contenant (210) s'aboute contre la partie de surface du substrat pour distribuer la substance sur la partie de surface du substrat.

5. Le dispositif distributeur (200) de la revendication 4,
dans lequel le mécanisme de capteur comprend un élément du groupe constitué par un capteur électrique (221, 2211, 2212) captant l'aboutement par une déconnexion d'un contact électrique, un capteur optique captant l'aboutement par un signal optique d'une barrière lumineuse étant affectée par l'aboutement, et un capteur de pression étant affecté par l'aboutement.

6. Procédé d'utilisation d'un dispositif distributeur selon l'une quelconque des revendications 1 à 5 pour la fabrication d'une micromatrice.

7. Procédé selon la revendication 6, le procédé comprenant les étapes de :

déplacement du contenant (104) incluant la substance (101) et du substrat (102) l'un par rapport à l'autre au sein de la région planaire (106) par le premier mécanisme de déplacement (105) ;
déplacement du contenant (104) incluant la substance (101) et du substrat (102) l'un par rapport à l'autre dans la direction (108) sensiblement perpendiculaire à la région planaire (106) par le deuxième mécanisme de déplacement (115, 201 à 209), distribuant ainsi la substance (101) sur la partie de surface (109) du substrat (102) ;
maintien du contenant (104) incluant la substance (101) par l'unité de préhension (103, 207),
entraînement mécanique de l'adaptateur (209), lequel est couplé à l'unité de préhension (103, 207), par l'unité d'entraînement (208),
génération d'une force de répulsion entre l'adaptateur (209) et l'unité de préhension (103, 207) par le premier élément magnétique (206) couplé à l'adaptateur (209) et par le deuxième élément magnétique (205) couplé à l'unité de préhension, laquelle force de répulsion tend à déplacer l'unité de préhension en l'éloignant du substrat.

Fig. 1

Fig. 2

Fig 3

Fig. 4a

Fig. 4b

Fig. 4c

Fig. 4d

Fig. 4e

Fig. 4f

Fig. 4g

Fig 5

Fig. 6

l=1 mm

| v[mm/s] | 0.4 hin u. zurück | 0.28 | 0.04 | 0.12 | 0.2 | 0.4 | 8 |
|---------|-------------------|------|------|------|-----|-----|---|
| v[U/s]  | 0.1               | 0.07 | 0.01 | 0.03 | 0.05 | 0.1 | 2 |
| t[s]    | 5                 | 3.57 | 25   | 8.33 | 5   | 2.5 | 0.125 |

Fig 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60826678 B
- WO 200001798 A
- US 6694197 B1
- WO 0001798 A
- WO 9746319 A
- US 6116297 A
- US 5807522 A
- WO 03013718 A1

**Non-patent literature cited in the description**

- **SHALON et al.** A DNA microarray system for analyzing complex DNA samples using two-color fluorescence probe hybridization. *Genome Research,* vol. 6 (7), 639-645